# EUROPEAN PATENT SPECIFICATION

(11) **EP 4 336 331 B1**
(45) Date of publication and mention of the grant of the patent: **04.03.2026**
(21) Application number: 23797622.0
(22) Date of filing: 24.05.2023
(51) Int. Cl.: G06F 3/04817, G06F 3/0484, G06F 8/61, G06F 9/451, G06F 9/48, G06F 9/54

(54) **APPLICATION CONTINUATION METHOD AND APPARATUS**
VERFAHREN UND VORRICHTUNG ZUR FORTSETZUNG EINER ANWENDUNG
PROCÉDÉ ET APPAREIL DE CONTINUATION D'APPLICATION

(30) Priority: 18.07.2022 CN 202210838814
(43) Date of publication of application: 13.03.2024
(73) Proprietor: Honor Device Co., Ltd., Shenzhen, Guangdong 518040 (CN)
(72) Inventor: WANG, Lei, Shenzhen, Guangdong 518040 (CN)
(74) Representative: Beder, Jens
(86) International application number: PCT/CN2023/095969
(87) International publication number: WO 2024/016832

(56) References cited:
- EP-A2- 2 466 921
- WO-A1-2021/083087
- CN-A- 104 683 469
- CN-A- 104 683 469
- CN-A- 113 220 385
- CN-A- 114 924 671
- ANONYMOUS: "Pick up where you left off with Handoff on Mac - Apple Support", 15 December 2019 (2019-12-15), XP093058737, Retrieved from the Internet <URL:https://web.archive.org/web/20191215005648/https://support.apple.com/en-gb/guide/mac-help/mchl732d3c0a/mac> [retrieved on 20230628]
- BILDNER TV: "Tipps & Tricks rund um die Apple ID: einfache Synchronisierung aller Apple-Ger�te mit MacOS und iOS", 9 January 2019 (2019-01-09), Youtube, XP093260383, Retrieved from the Internet <URL:https://www.youtube.com/watch?v=tcrNjq_28z0> [retrieved on 20250317]

## Description

This application claims priority to Chinese Patent Application CN 114 924 671 A (Application No. 202210838814.7), filed with the China National Intellectual Property Administration on July 18, 2022 and entitled "APPLICATION HANDOFF METHOD AND APPARATUS".

### TECHNICAL FIELD

This application relates to the field of terminal technologies, and in particular, to an application handoff method, a terminal device and a computer-readable storage medium.

### BACKGROUND

With popularization and development of the Internet, types of terminal devices are increasingly diversified, a quantity of terminal devices is increasing, and a user has an increasingly high requirement for flexible switching between devices in a multi-device scenario. For example, the user has terminal devices such as a mobile phone and a tablet computer. When the user watches a video in a video application on the mobile phone and wants to continue to play the video on the tablet computer, the user needs to find the video on the tablet computer through a series of steps.

Usually, the user may log in on the tablet computer by using an account corresponding to the video application, find a video resource that has been played in a play history, and open the video resource to continue to play it.

However, steps of the foregoing application handoff method are complex.

With regard to the prior art, reference is made to Anonymous: "Pick up where you left off with Handoff on Mac - Apple Support", 15 December 2019.

Further reference is made to the patent applications CN 104 683 469 A and EP 2 46 6921 A2.

### SUMMARY

To solve the problem of simplifying an application handoff method and thereby improving user experience for an application handoff function, embodiments of this application provide an application handoff method, a terminal device and a computer-readable storage medium according to the enclosed independent claims. Advantageous features of the present invention are defined in the corresponding subclaims. When a second device determines that a first target application is not installed, the second device can install, based on triggering by a user for an icon of the first target application, the first target application that is not installed, and implement handoff for the first target application based on triggering for the icon of the first target application after the installation ends. This simplifies an application handoff method, and improves user experience for an application handoff function.

### BRIEF DESCRIPTION OF DRAWINGS

FIG. 1 is a schematic diagram of a scenario according to an embodiment of this application;
FIG. 2 is a schematic diagram of an interface for watching a video in a handoff mode according to an embodiment of this application;
FIG. 3 is a schematic structural diagram of a first device (or second device) according to an embodiment of this application;
FIG. 4 is a schematic diagram of a software structure of a first device (or second device) according to an embodiment of this application;
FIG. 5A, FIG. 5B, FIG. 5C, and FIG. 5D are a schematic diagram of an office scenario according to an embodiment that does not relate to the subject matter of the enclosed claims;
FIG. 6A and FIG. 6B are a schematic diagram of an interface for displaying a handoff application on a second device according to an embodiment that does not relate to the subject matter of the enclosed claims;
FIG. 7A, FIG. 7B, FIG. 7C, FIG. 7D, and FIG. 7E are a schematic diagram of an interface for installing a handoff application on a second device according to an embodiment of this application;
FIG. 8A, FIG. 8B, and FIG. 8C are a schematic diagram of an interface for login of an application account on a second device according to an embodiment of this application;
FIG. 9A and FIG. 9B are a schematic diagram of an interface for opening a browser on a second device according to an embodiment that does not relate to the subject matter of the enclosed claims;
FIG. 10A, FIG. 10B, FIG. 10C, and FIG. 10D are a schematic diagram of another office scenario according to an embodiment of this application;
FIG. 11A, FIG. 11B, FIG. 11C, FIG. 11D, and FIG. 11E are a schematic diagram of a video play scenario according to an embodiment of this application;
FIG. 12A, FIG. 12B, and FIG. 12C are a schematic diagram of another video play scenario according to an embodiment of this application;
FIG. 13A, FIG. 13B, and FIG. 13C are a schematic diagram of still another video play scenario according to an embodiment of this application;
FIG. 14A, FIG. 14B, FIG. 14C, and FIG. 14D are a schematic diagram of another interface for installing a handoff application on a second device according to an embodiment of this application;
FIG. 15A, FIG. 15B, FIG. 15C, and FIG. 15D are a schematic diagram of still another interface for installing a handoff application on a second device according to an embodiment of this application;
FIG. 16 is a schematic flowchart of determining, by a third-party APP service cloud, whether to play a video according to an embodiment of this application;
FIG. 17A, FIG. 17B, and FIG. 17C are a schematic diagram of an interface for registering a membership on a second device during handoff according to an embodiment of this application;
FIG. 18A, FIG. 18B, FIG. 18C, and FIG. 18D are a schematic diagram of an interface for cross-device login according to an embodiment of this application;
FIG. 19A and FIG. 19B are a schematic diagram of an interface on which a second device implements handoff for a handoff sub-application on a first device according to an embodiment of this application;
FIG. 20A, FIG. 20B, FIG. 20C, and FIG. 20D are a schematic diagram of a plurality of scenarios according to an embodiment that does not relate to the subject matter of the enclosed claims;
FIG. 21A, FIG. 21B, and FIG. 21C are a schematic flowchart of an application handoff method according to an embodiment of this application;
FIG. 22 is a schematic structural diagram of an application handoff system according to an embodiment of this application;
FIG. 23 is a schematic structural diagram of an application handoff apparatus according to an embodiment of this application; and
FIG. 24 is a schematic diagram of a hardware structure of another first device (or second device) according to an embodiment of the present application.

### DESCRIPTION OF EMBODIMENTS

For ease of describing the technical solutions in the embodiments of this application clearly, in the embodiments of this application, the terms "first", "second", and the like are used to distinguish between same or similar items with a basically same function and effect. For example, a first value and a second value are merely intended to distinguish between different values, but not to limit a sequence of the values. A person skilled in the art can understand that the terms "first", "second", and the like are not intended to limit a quantity or an execution sequence, and the terms "first", "second", and the like do not mean being definitely different either.

It should be noted that, in this application, the terms "example", "for example", and the like are used to give an example, an illustration, or a description. Any embodiment or design scheme described as an "example" or "for example" in this application should not be construed as being more preferred or more advantageous than another embodiment or design scheme. To be precise, the terms "example", "for example", and the like are intended to present a related concept in a specific manner.

In this application, "at least one" means one or more, and "a plurality of" means two or more. "And/or" describes an association relationship between associated objects and indicates that three relationships may exist. For example, A and/or B may indicate the following three cases: only A exists, both A and B exist, and only B exists, where A and B may be singular or plural. The character "/" usually indicates an "or" relationship between the associated objects. "At least one of the following items" or a similar expression thereof indicates any combination of the items, including one of the items or any combination of a plurality of the items. For example, at least one of a, b, or c may indicate a, b, c, a and b, a and c, b and c, or a, b, and c, where a, b, and c may be singular or plural.

Continuous development of communication technologies contributes to a possibility of interconnectivity between devices, and cross-device application handoff also becomes an important function in a subsequent multi-device scenario. Application handoff may be understood as follows: When a user uses an application on a first device, the user may switch a use status of the application on a second device that meets a handoff condition, and continue to use the application.

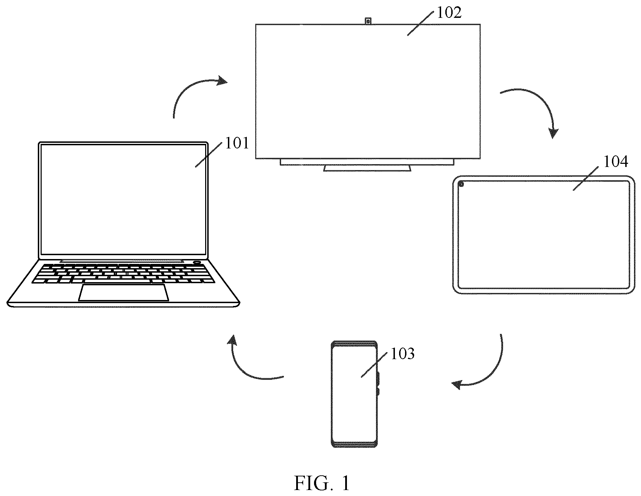

FIG. 1 is a schematic diagram of a scenario according to an embodiment of this application. In the embodiment corresponding to FIG. 1, the scenario may include a computer 101, a large screen 102, a mobile phone 103, and a tablet computer 104.

It can be understood that, if a user has all of the computer 101, the large screen 102, the mobile phone 103, and the tablet computer 104, the user may use at least one of the computer 101, the large screen 102, and the tablet computer 104 to continue to display content presented in an application on the mobile phone 103.

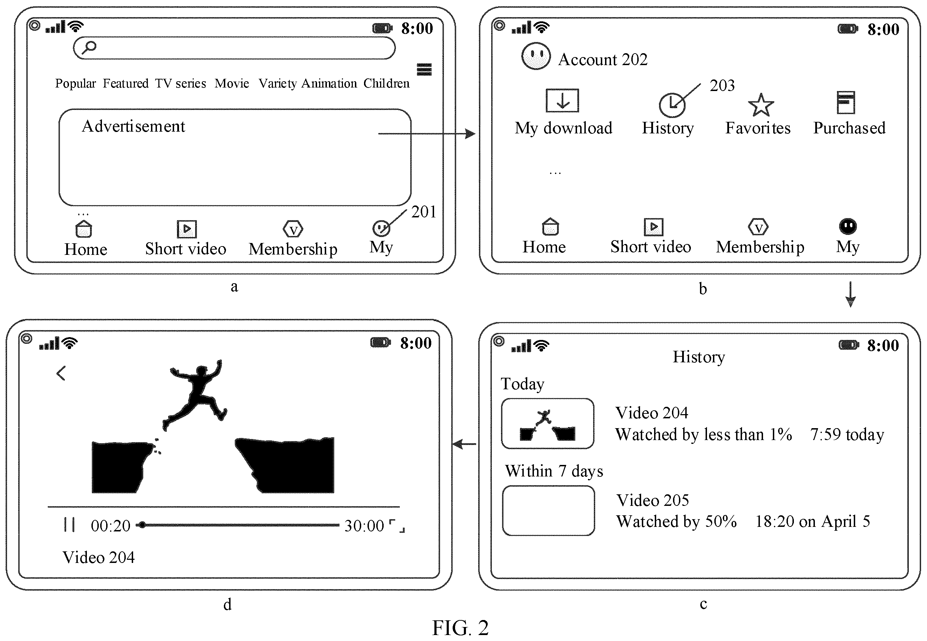

Description is provided by using an example in which a user uses a video play application on the mobile phone 103 to play a video and wants to continue to play the video on the tablet computer 104. FIG. 2 is a schematic diagram of an interface for watching a video in a handoff mode according to an embodiment of this application.

When a user uses a video play application on the mobile phone 103 to play a video and wants to continue to play the video on the tablet computer 104, the user may open a same video play application on the tablet computer 104. For example, the tablet computer 104 may display an interface shown in a in FIG. 2. The interface shown in a in FIG. 2 may include a text box for searching for a video, a Popular control, a Featured control, a TV series control, a Movie control, a Variety control, an Animation control, a Children control, a control for viewing other types of videos, an advertisement, a Home control, a Short video control, a Membership control, a My control 201, and the like.

On the interface shown in a in FIG. 2, when the tablet computer 104 receives a trigger operation performed by the user on the My control 201, the tablet computer 104 may display an interface shown in b in FIG. 2. The interface shown in b in FIG. 2 may include a control for viewing a login account (for example, an Account control 202), a My download control, a History control 203, a Favorites control, a Purchase control for viewing purchased videos, and the like.

On the interface shown in b in FIG. 2, when the tablet computer 104 receives a trigger operation performed by the user on the History control 203, the tablet computer 104 may display an interface shown in c in FIG. 2. The interface shown in c in FIG. 2 may include a video 204 played today and a video 205 played within seven days. The video 204 was watched by less than 1%, and was watched at 7:59 today. The video 205 was watched by 50%, and was watched at 18:20 on April 5.

On the interface shown in c in FIG. 2, when the tablet computer 104 receives a trigger operation performed by the user on the video 204, the tablet computer 104 may display an interface shown in d in FIG. 2. The interface shown in d in FIG. 2 may include content of the video 204, a control for exiting video play, a control for pausing the video, a progress bar for indicating a progress of the video, a control for zoom-in on the video, and the like.

Based on this, the user may implement handoff of the video play application from the mobile phone 103 to the tablet computer 104 through a series of operations on the interface shown in a in FIG. 2 to the interface shown in d in FIG. 2.

However, the steps of the foregoing video handoff method are complex, affecting user experience during cross-device application handoff.

In view of this, embodiments of this application provide an application handoff method. The method relates to a first device and a second device. The second device displays an icon of a first target application and an identifier for indicating application handoff in response to reception of a first message sent by the first device, where the first message is used for indicating the second device to implement handoff for the first target application. The second device displays a first pop-up window including a first control in response to a first operation performed on the icon when the first target application is not installed on the second device, where the first pop-up window is used for asking a user whether to install the first target application. The second device installs the first target application in response to a second operation performed on the first control, and after the installation of the first target application is completed, re-displays the icon of the first target application and the identifier for indicating application handoff. The second device displays a first application interface of the first target application in response to a third operation performed on the icon, where the first application interface is related to a second application interface displayed when the first device sends the first message to the second device. In this way, the second device can install, based on triggering by a user for the icon of the first target application, the first target application that is not installed, and implement handoff for the first target application based on triggering for the icon of the first target application after the installation ends. This simplifies an application handoff method, and improves user experience for an application handoff function.

The first device may be understood as a handoff initiating device, or referred to as a handoff device. The second device may be understood as a device that implements a handoff function, or referred to as a handoff-to device. The identifier for indicating application handoff may be a handoff bubble in embodiments of this application. That the first application interface is related to the second application interface may be understood as that content displayed on the first application interface is handed off to the second application interface. For example, document content (or video content) displayed on the second application interface is the same as or similar to document content (video content) displayed on the first application interface.

It can be understood that the application handoff method provided in embodiments of this application may be applied to an office scenario, a video play scenario, a reading scenario, a music play scenario, a game scenario, or the like. This is not limited in embodiments of this application.

It can be understood that the first device (or second device) may also be referred to as a terminal (terminal), user equipment (user equipment, UE), a mobile station (mobile station, MS), a mobile terminal (mobile terminal, MT), or the like. The first device (or second device) may be a mobile phone (mobile phone), a smart television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like that has an application handoff function. A specific technology and a specific device form used by the first device (or second device) are not limited in embodiments of this application.

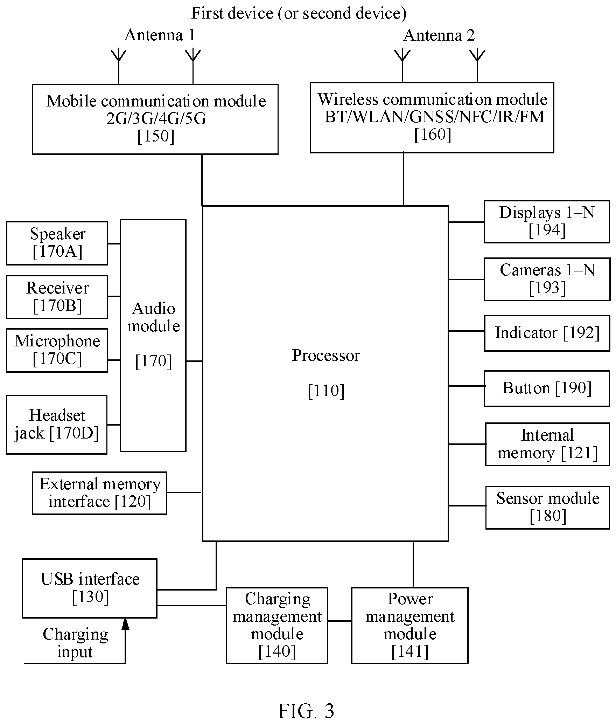

To better understand embodiments of this application, the following describes a structure of the first device (or second device) in embodiments of this application. For example, FIG. 3 is a schematic structural diagram of a first device (or second device) according to an embodiment of this application.

It can be understood that, as shown in FIG. 3, structures of the first device and the second device may be the same, or structures of the first device and the second device may be different. This is not limited in this embodiment of this application.

The first device (or second device) may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a receiver 170B, a microphone 170C, a headset jack 170D, a sensor module 180, a button 190, an indicator 192, a camera 193, a display 194, and the like.

It can be understood that the structure shown in this embodiment of this application does not constitute a specific limitation on the first device (or second device). In some other embodiments of this application, the first device (or second device) may include more or fewer components than those shown in the figure, or some components may be combined, or some components may be split, or there may be a different component layout. The components shown in the figure may be implemented by using hardware, software, or a combination of software and hardware.

The processor 110 may include one or more processing units. Different processing units may be separate components, or may be integrated into one or more processors. A memory may be further disposed in the processor 110 to store instructions and data.

The USB interface 130 is an interface that conforms to a USB standard specification, and may be specifically a mini-USB interface, a micro-USB interface, a USB type-C interface, or the like. The USB interface 130 may be configured to connect to a charger to charge the first device (or second device), or may be configured to transmit data between the first device (or second device) and a peripheral device, or may be configured to connect to a headset for playing audio through the headset. The interface may be further configured to connect to another first device (or second device), for example, an AR device.

The charging management module 140 is configured to receive charging input from a charger. The charger may be a wireless charger or a wired charger. The power management module 141 is configured to connect to the charging management module 140 and the processor 110.

A wireless communication function of the first device (or second device) may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. The antenna in the first device (or second device) may be configured to cover one or more communication frequency bands. Different antennas may be further multiplexed to improve antenna utilization.

The mobile communication module 150 may provide a solution applied to the first device (or second device) for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation.

The wireless communication module 160 may provide a solution applied to the first device (or second device) for wireless communication such as a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), or frequency modulation (frequency modulation, FM).

The first device (or second device) implements a display function through the GPU, the display 194, the application processor, and the like. The GPU is a microprocessor for image processing, and is connected to the display 194 and the application processor. The GPU is configured to perform mathematical and geometric computation, and render an image.

The display 194 is configured to display an image, a video, and the like. The display 194 includes a display panel. In some embodiments, the first device (or second device) may include one or N displays 194, where N is a positive integer greater than 1.

The first device (or second device) may implement a photographing function through the ISP, the camera 193, the video codec, the GPU, the display 194, the application processor, and the like.

The camera 193 is configured to capture a static image or a video. In some embodiments, the first device (or second device) may include one or N cameras 193, where N is a positive integer greater than 1.

The external memory interface 120 may be configured to connect to an external storage card such as a micro SD card, to expand a storage capability of the first device (or second device). The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area.

The first device (or second device) may implement an audio function, for example, music playing and recording, through the audio module 170, the speaker 170A, the receiver 170B, the microphone 170C, the headset jack 170D, the application processor, and the like.

The audio module 170 is configured to convert digital audio information into analog audio signal output, and is also configured to convert analog audio input into a digital audio signal. The speaker 170A, also referred to as a "loudspeaker", is configured to convert an electrical audio signal into a sound signal. The first device (or second device) may listen to music or answer a hands-free call through the speaker 170A. The receiver 170B, also referred to as an "earpiece", is configured to convert an electrical audio signal into a sound signal. When a call is answered or a voice message is listened to by using the first device (or second device), the receiver 170B may be put close to a human ear to listen to a voice. The headset jack 170D is configured to connect to a wired headset.

The microphone 170C, also referred to as a "mike" or a "mic", is configured to convert a sound signal into an electrical signal. In this embodiment of this application, the first device (or second device) may receive, based on the microphone 170C, a sound signal for waking up the first device (or second device), and convert the sound signal into an electrical signal, for example, voiceprint data described in embodiments of this application, for subsequent processing. The first device (or second device) may have at least one microphone 170C.

The sensor module 180 may include one or more of the following sensors, for example, a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, or the like (not shown in FIG. 3).

The button 190 includes a power button, a volume button, and the like. The button 190 may be a mechanical button or a touch button. The first device (or second device) may receive input on the button, and generate button signal input related to user settings and function control of the first device (or second device). The indicator 192 may be an indicator light, and may be configured to indicate a charging status and a battery level change, or may be configured to indicate a message, a missed call, a notification, and the like.

A software system of the first device (or second device) may use a hierarchical architecture, an event-driven architecture, a microkernel architecture, a microservice architecture, a cloud architecture, or the like. Details are not described herein.

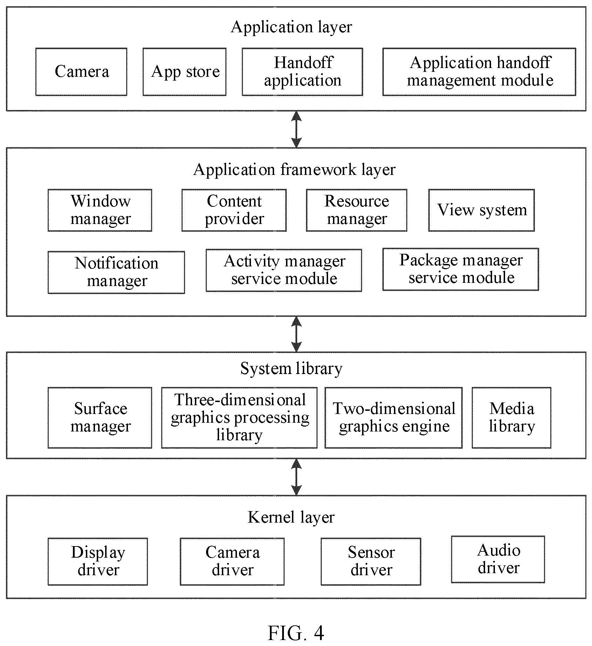

For example, FIG. 4 is a schematic diagram of a software structure of a first device (or second device) according to an embodiment of this application. As shown in FIG. 4, in a hierarchical architecture, software may be divided into several layers, and each layer has a clear role and task. The layers communicate with each other through a software interface. In some embodiments, an Android (android) system is divided into four layers: an application layer, an application framework (framework) layer, a system library, and a kernel (kernel) layer from top to bottom.

As shown in FIG. 4, the application layer may include one or more of the following: a camera, an app store, a handoff application, an application handoff management module, and the like.

In this embodiment of this application, the app store may be used for querying an installation package for an application. For example, when the first device does not include a handoff application, the app store may be used for querying and downloading a handoff application, so that a downloaded handoff application can take over a handoff function initiated by the first device.

In this embodiment of this application, the handoff application may be a collective term for applications with a handoff function. For example, the handoff application may be a document application (or referred to as an office application), a video play application (or referred to as a multimedia play application), or the like.

For example, a document application on the first device may be used for supporting the first device in performing functions of viewing and editing a document, and the like; and a document application on the second device may be used for taking over a handoff function initiated by the first device, to continue to perform functions of viewing and editing a document, and the like. A video play application on the first device may be used for supporting the first device in performing functions of searching for a video, playing a video, and the like; and a video play application on the second device may be used for taking over a handoff function initiated by the first device, to continue to perform functions of playing a video and the like. It can be understood that the handoff application may not be limited to the document application and the video play application described in this embodiment of this application.

In this embodiment of this application, the application handoff management module is configured to perform an application information registration function, an application status transfer function, an event callback function, a handoff capability judgment function, and the like. The application handoff management module may further have a near-field connection management function, a system account management function, an intelligent management function, a security management function, and the like. The near-field connection management function may include a near-field device discovery function, a networking function, a transmission function, and the like. The security management function may include a device authentication function, a data encryption function, and the like.

It can be understood that an application handoff management module on the first device and an application handoff management module on the second device may exchange data through a secure encrypted transmission channel.

The application framework layer provides an application programming interface (application programming interface, API) and a programming framework for applications at the application layer. The application framework layer includes some predefined functions.

As shown in FIG. 4, the application framework layer may include a window manager, a content provider, a resource manager, a view system, a notification manager, an activity manager service module, a package manager service module, and the like.

The window manager is configured to manage a window application. The window manager may obtain a size of the display, determine whether there is a status bar, lock a screen, touch the screen, drag the screen, take a screenshot, and the like.

In this embodiment of this application, a window manager of the second device may be further configured to provide a handoff prompt on a desktop based on prompt information sent by the application handoff management module, for example, call the display to display a handoff bubble around an icon of a handoff application on the desktop. The window manager may be further configured to call the display to display, on the desktop, a pop-up window for indicating installation or an upgrade, and configured to call the display to display, on the desktop, a pop-up window for indicating to pull up handoff, and the like.

The content provider is configured to store and obtain data, and enable the data to be accessed by an application. The data may include a video, an image, audio, calls that are made and answered, a browsing history, a bookmark, an address book, and the like.

The resource manager provides various resources such as a localized character string, an icon, a picture, a layout file, and a video file for an application.

The view system includes visual controls, such as a control for displaying text and a control for displaying a picture. The view system may be configured to construct an application. A display interface may include one or more views. For example, a display interface including an SMS message notification icon may include a text display view and a picture display view.

The notification manager enables an application to display notification information in a status bar, and may be configured to convey a notification message. The notification manager may automatically disappear after a short pause without user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on the screen in a form of a dialog window. For example, text information is prompted in the status bar, a prompt tone is played, vibration occurs, or an indicator blinks.

The activity manager service (activity manager service, AMS) module is configured to perform functions of starting, switching, and scheduling components such as activities, service broadcasting, and content in the system, managing and scheduling application processes, and the like.

The package manager service (package manage service, PMS) module is configured to perform functions of installing, uninstalling, optimizing, and querying various Android application packages (android application package, APK) and the like.

It can be understood that the first device may alternatively not include the app store, the activity manager service module, the package manager service module, or the like.

The system library may include a plurality of functional modules, for example, a surface manager (surface manager), a media library (media libraries), a three-dimensional graphics processing library, and a two-dimensional graphics engine.

The surface manager is configured to manage a display subsystem, and provide fusion of 2D and 3D layers for a plurality of applications.

The media library supports playing and recording for a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like. The two-dimensional graphics engine is a drawing engine for 2D drawing.

The kernel layer is a layer between hardware and software. The kernel layer includes one or more of the following, for example, a display driver, a camera driver, an audio driver, and a sensor driver.

It can be understood that, a software structure of the first device and a software structure of the second device may be the same or different. The software structure of the first device (or second device) corresponding to FIG. 4 may alternatively include other layers and other modules. This is not limited in this embodiment of this application.

The following describes the technical solutions of this application and how to resolve the foregoing technical problems according to the technical solutions of this application in detail by using specific embodiments. The following several specific embodiments may be independently implemented, or may be combined with each other, and same or similar concepts or processes may not be described repeatedly in some embodiments.

The application handoff method described in embodiments of this application may be applied to an office scenario (refer to descriptions corresponding to a scenario 1), a video play scenario (refer to descriptions corresponding to a scenario 2), or a plurality of scenarios (refer to descriptions corresponding to a scenario 3).

It can be understood that a first device, a second device, and a third device described in embodiments of this application may belong to a same trust ring, and that devices belong to a same trust ring may be a prerequisite (or referred to as a handoff condition) for the application handoff method described in embodiments of this application.

The belonging to a same trust ring may be understood as that a same personal device account is logged in on the devices, a distance between the devices meets a specific threshold, and Bluetooth (or Wi-Fi) is enabled on the devices. The personal device account may be used for device authentication when devices are connected to each other. Bluetooth (or Wi-Fi) may be used for device discovery and connection between devices.

In a possible implementation, due to limited bandwidth of Bluetooth, Bluetooth may be used for device discovery between devices, and Wi-Fi may be used for device connection, to ensure optimal effect of establishing a connection between devices.

### Scenario 1: application handoff method in an office scenario

In an embodiment corresponding to the scenario 1, an example in which a handoff application is a document application is used for description, but this example does not constitute a limitation on this embodiment of this application.

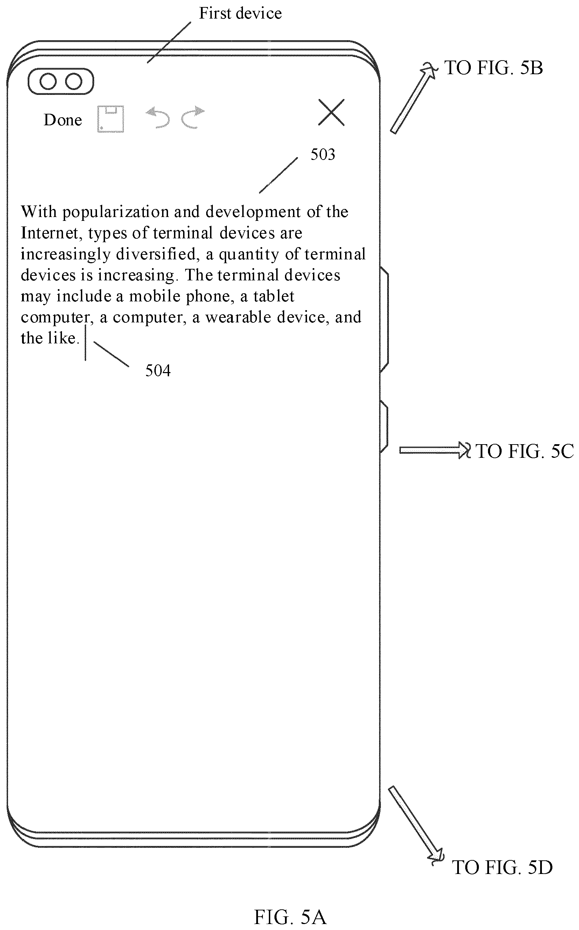

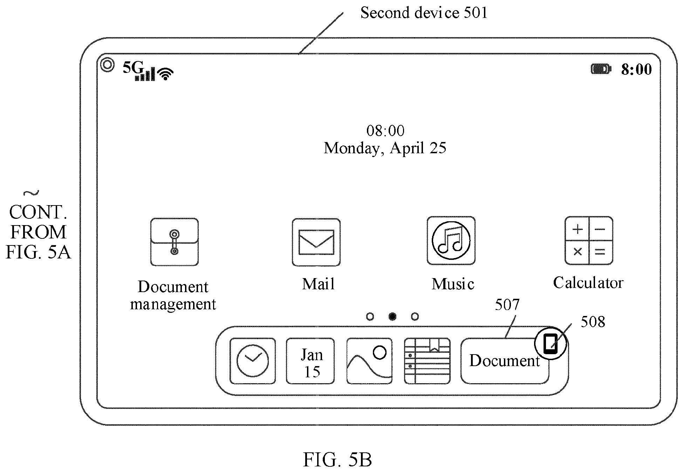

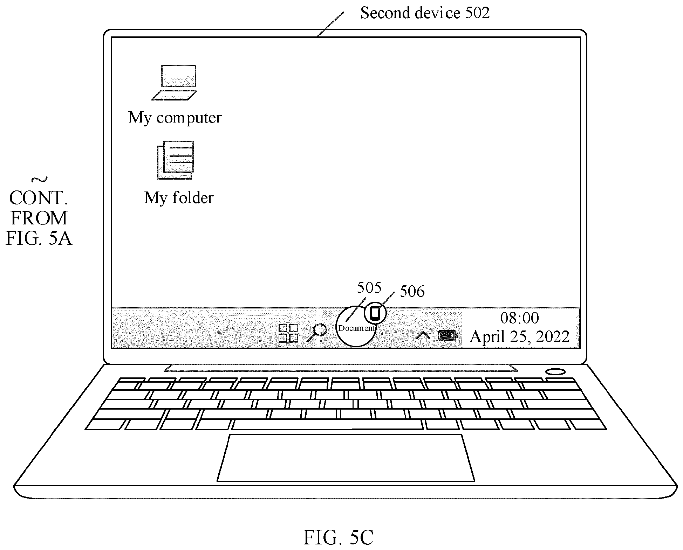

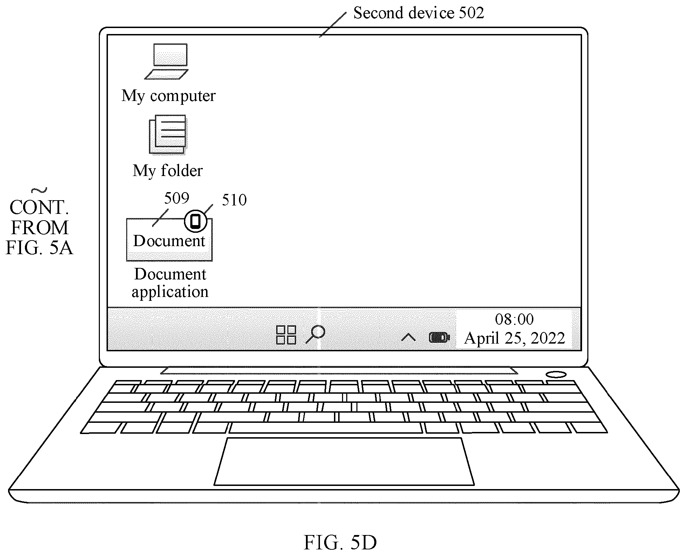

For example, FIG. 5A, FIG. 5B, FIG. 5C, and FIG. 5D are a schematic diagram of an office scenario according to an embodiment that does not relate to the subject matter of the enclosed claims. As shown in FIG. 5A, FIG. 5B, FIG. 5C, and FIG. 5D, the office scenario may include a first device, a second device 501, and a second device 502. An example in which the first device is a mobile phone, the second device 501 is a tablet computer, and the second device 502 is a computer is used for description.

When the first device receives an operation of editing, by a user, a document in the document application, the first device may display an interface shown in FIG. 5A. The interface shown in FIG. 5A may include document content 503, a cursor 504, a control for indicating to complete document editing, a control for saving a document, a control for withdrawal, a control for canceling withdrawal, a control for exiting document editing, and the like. Content displayed in the document content 503 may be as follows: With popularization and development of the Internet, types of terminal devices are increasingly diversified, a quantity of terminal devices is increasing. The terminal devices may include a mobile phone, a tablet computer, a computer, a wearable device, and the like.

Further, when the first device, the second device 501, and the second device 502 belong to a same trust ring, and when the first device displays the document content in the document application shown in FIG. 5A and the document application has a handoff function, the first device may send an icon of the document application and a message for indicating handoff to the second device 501 and the second device 502 respectively, the second device 501 may display an interface shown in FIG. 5B, and the second device 502 may display an interface shown in FIG. 5C or an interface shown in FIG. 5D.

It can be understood that, when a connection is established between a plurality of devices, any device may initiate a handoff function to another device that meets a handoff condition.

On the interface shown in FIG. 5B, a dock bar at the bottom of the interface may include an icon of a document application 507 and a handoff bubble 508 around the document application 507. The dock bar may further include an icon of a clock application, an icon of a calendar application, an icon of a gallery application, an icon of a notes application, and the like. The interface may further include information for indicating time and date, an icon of a document management application, an icon of a mail application, an icon of a music application, an icon of a computer application, and the like. The handoff bubble 508 is used for indicating that a handoff application on the first device is triggering a handoff function, and the handoff bubble 508 may be displayed as an icon in which a shape of the first device is included in a circle.

It can be understood that, on the interface shown in FIG. 5B, the display of the handoff bubble 508 may be canceled when a focus disappears from the document application on the first device. For example, when the focus of the first device disappears from the document application, the display of the handoff bubble 508 (and/or the icon of the document application 507) on the second device 501 may be canceled. Alternatively, when the focus of the first device is on the document application and the first device does not receive any trigger operation performed by a user on the document application within a specific period of time, the handoff bubble 508 (and/or the icon of the document application 507) on the second device 501 may be displayed for a threshold period of time, and then the display is canceled. It can be understood that the trigger operation may be a tap operation, a touch-and-hold operation, a swipe operation, or the like. This is not limited in this embodiment of this application.

That the focus of the first device disappears from the document application may be understood as that the first device switches from the document application to another application, a screen of the first device is off, or the like. This may be understood as that the user does not have an intention to use the document application, and the handoff bubble 508 (and/or the icon of the document application 507) on the second device 501 does not need to be displayed all the time. Therefore, the display of the handoff bubble on the second device 501 may be canceled when the focus disappears from the document application on the first device.

In a possible implementation, when the display of the handoff bubble 508 is canceled, the first device may alternatively re-initiate the handoff function, so that the second device 501 re-displays the handoff bubble 508. For example, when the first device receives an operation performed by a user for turning on the screen, triggering any control in the document application, or switching from another application to the document application, in response to any one of the foregoing operations, the first device may re-initiate the handoff function, and send an icon of a document application and a message for indicating handoff to the second device 501, so that the second device 501 re-displays the handoff bubble 508.

In a possible implementation, when a user is editing document content on the first device, a focus of the first device remains on the document application, and when the first device receives a trigger operation performed by the user on the control for saving a document, the first device may re-initiate the handoff function, so that the second device 501 re-displays the handoff bubble 508.

It can be understood that, when the second device 501 displays a desktop shown in FIG. 5B, a user may view a handoff application with a handoff bubble in a dock bar on the desktop. Alternatively, this may be understood as that, when a user uses another application (or views another interface) on the second device 501, the user cannot view a handoff application with a handoff bubble on an interface on which the another application is located. This can prevent the handoff function from affecting use of another application by a user.

In a possible implementation, an icon of the handoff application with the handoff bubble may alternatively be displayed on a background multitasking interface of the second device 501. This is not limited in this embodiment of this application.

In a possible implementation, when the second device 501 displays an interface on which another application is located, the icon of the handoff application with the handoff bubble may alternatively be displayed in a form of prompt information or a pop-up window on the interface on which the another application is located, to prevent a user from ignoring the handoff function initiated by the first device.

On the interface shown in FIG. 5C, a taskbar at the bottom on the second device 502 may include an icon of a document application 505 and a handoff bubble 506 around the document application 505. The interface may further include a My computer icon and a My folder icon. The taskbar on the interface may further include a control for indicating to open a menu, a control for searching for content, a control for opening more applications, an icon for indicating a battery level of the second device 502, information for indicating time and date, and the like. For descriptions of functions of the handoff bubble 506, refer to the descriptions of the handoff bubble 508. Details are not described herein again.

It can be understood that, when the second device 502 displays a desktop shown in FIG. 5C, a user may view a handoff application with a handoff bubble in a taskbar on the desktop. Alternatively, this may be understood as that, even if a user uses another application on the second device 502, the handoff application with the handoff bubble may continue to be displayed in the taskbar at the bottom of the interface. This can prevent the user from ignoring the handoff function initiated by the first device when the user views another interface.

In a possible implementation, on the interface shown in FIG. 5D, when an interface displayed on the second device 502 includes an icon corresponding to a document application 509, the second device 502 may alternatively directly display a handoff bubble 510 in an upper right corner of the document application 509 on the desktop. In this case, an icon of a document application with a handoff bubble may not be displayed in the taskbar at the bottom on the second device 502. The second device 502 may not be limited to the computer, and may alternatively be another device.

Based on this, when the first device and the second device meet a handoff condition, the first device may send a message for indicating handoff to the second device when a user opens a handoff application, so that the second device can display a handoff application and a handoff bubble. Then the user may trigger a handoff application with a handoff bubble on the second device, and continue to view, on the second device, content of the handoff application on the first device. In this way, application handoff is conveniently enabled.

Based on the embodiment corresponding to FIG. 5A, FIG. 5B, FIG. 5C, and FIG. 5D, when the second device receives a trigger operation performed by a user on a handoff application with a handoff bubble, the second device may determine a handoff policy based on whether the handoff application is installed on the second device. An example in which the second device is a computer is used for description.

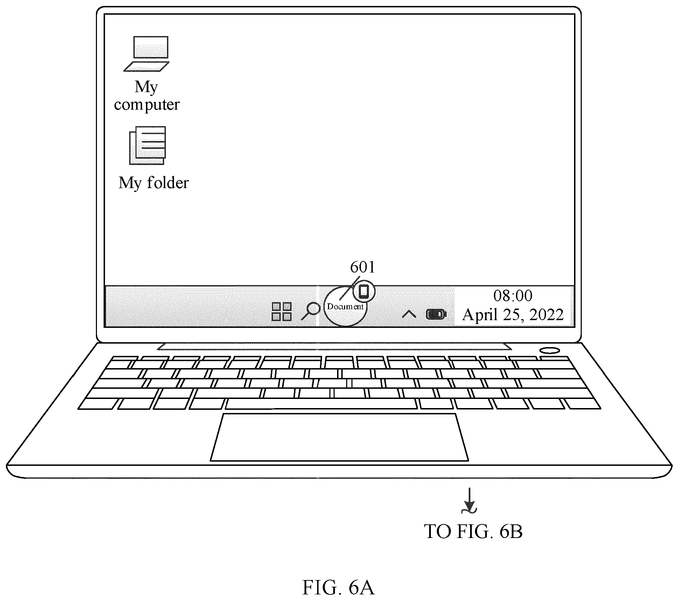

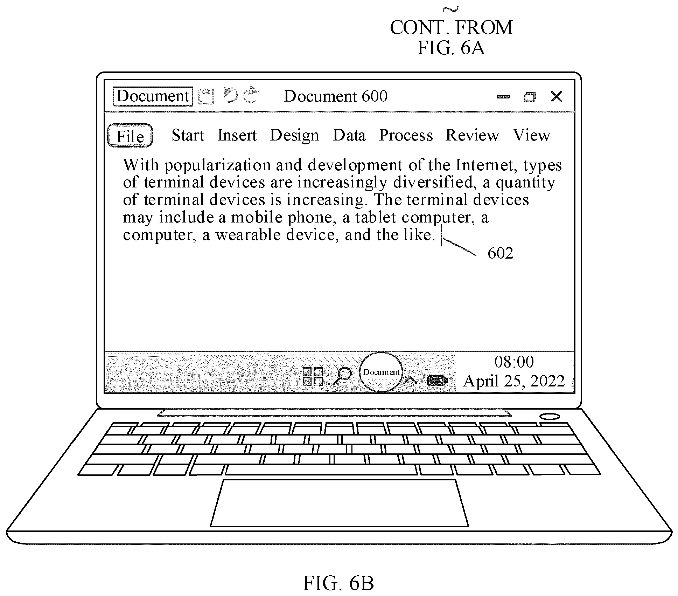

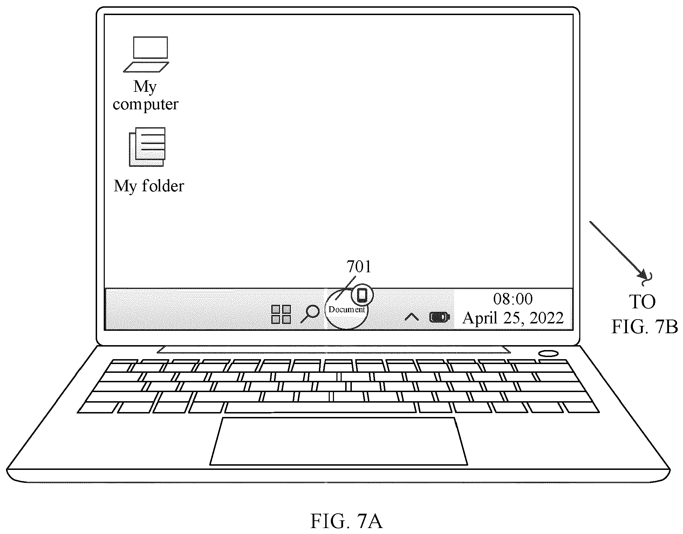

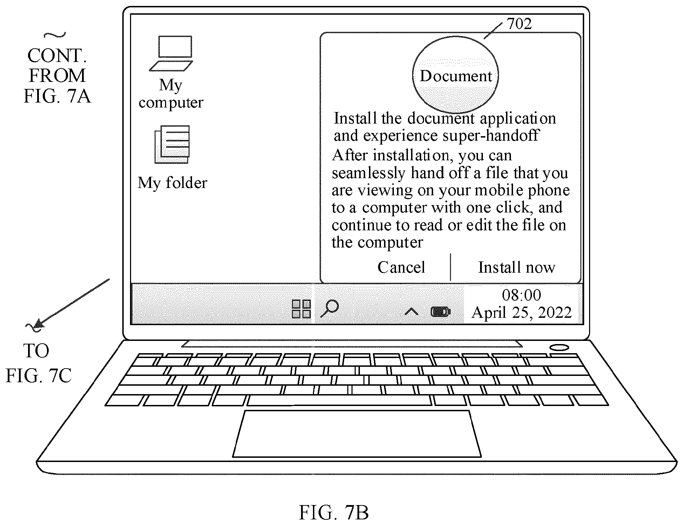

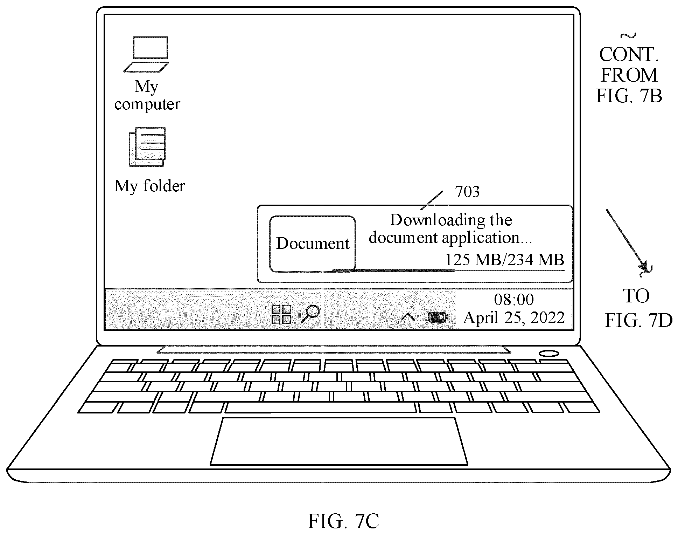

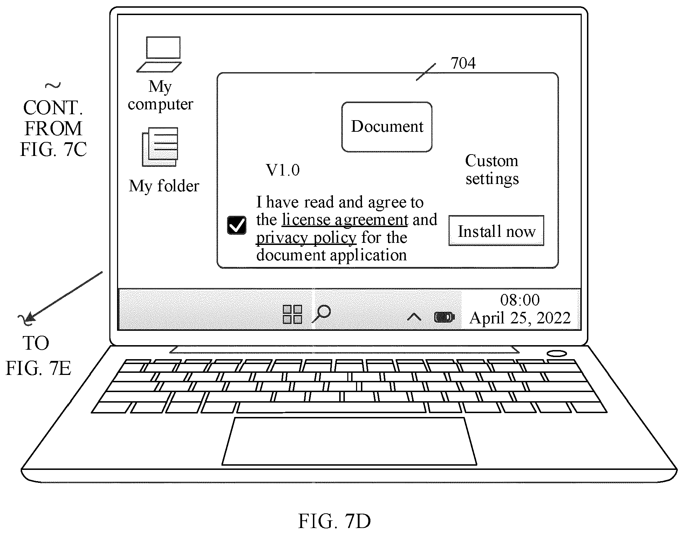

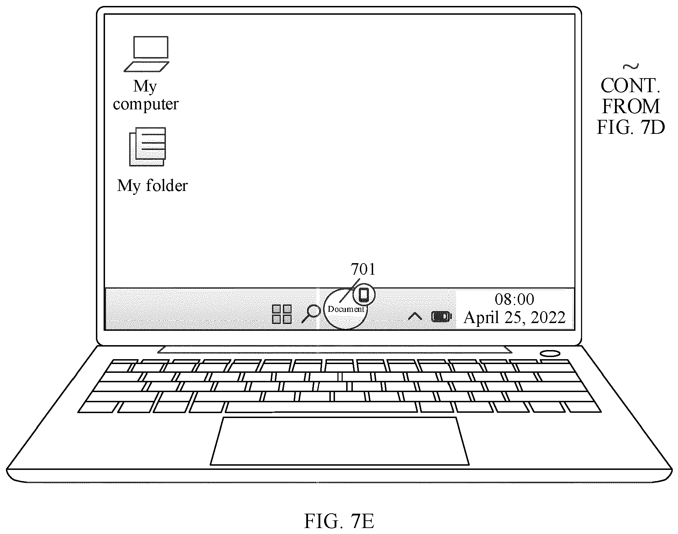

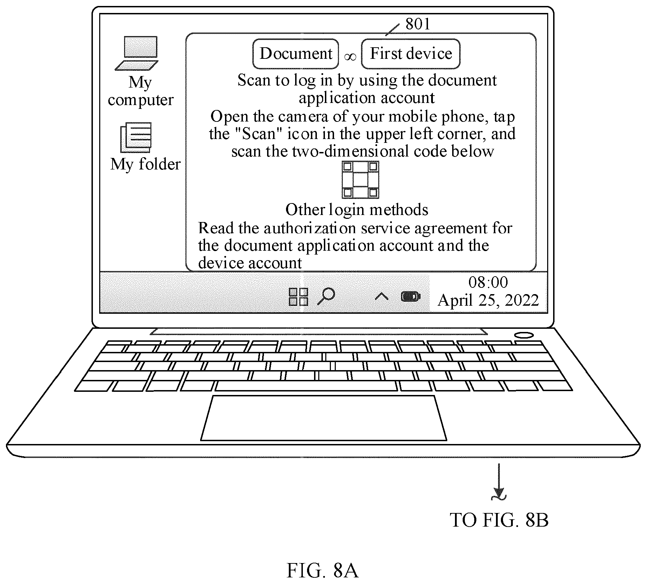

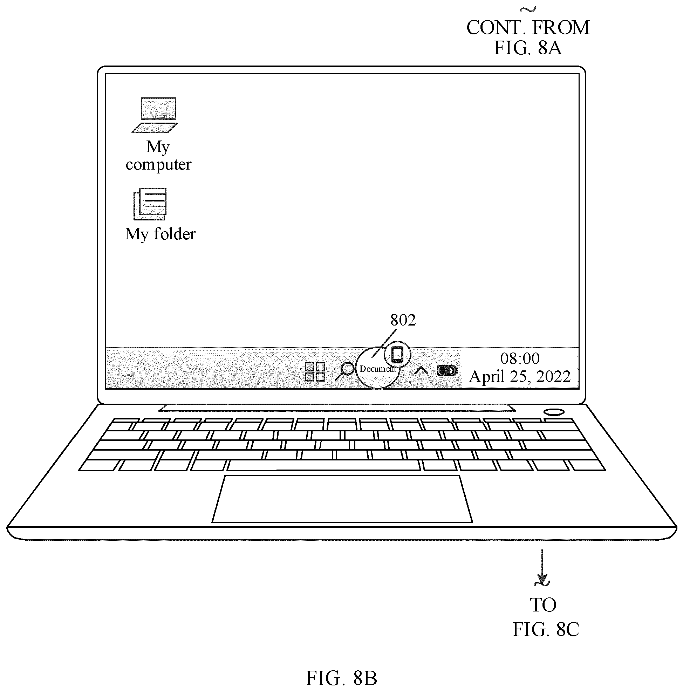

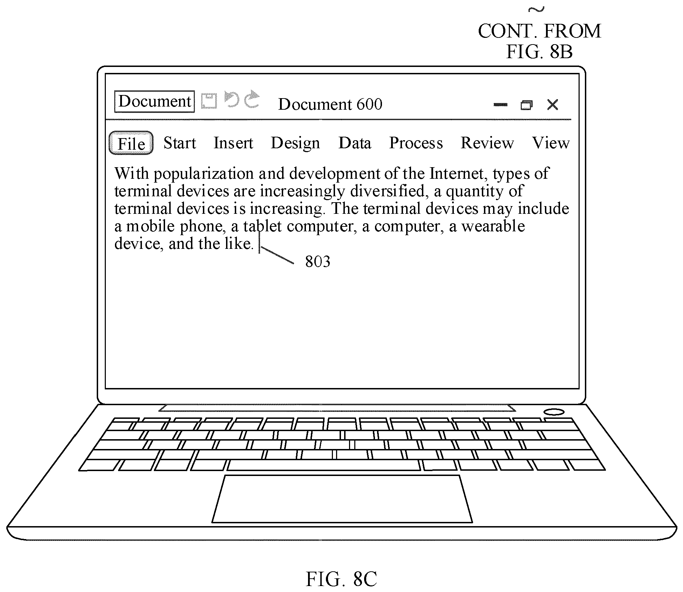

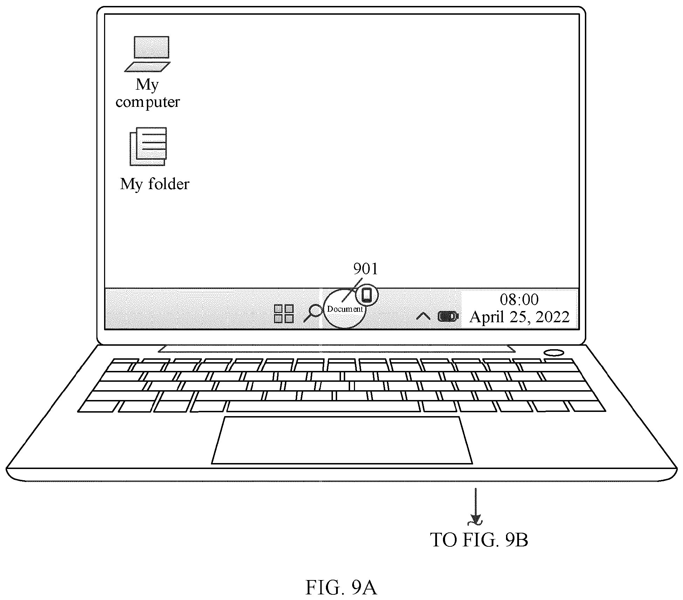

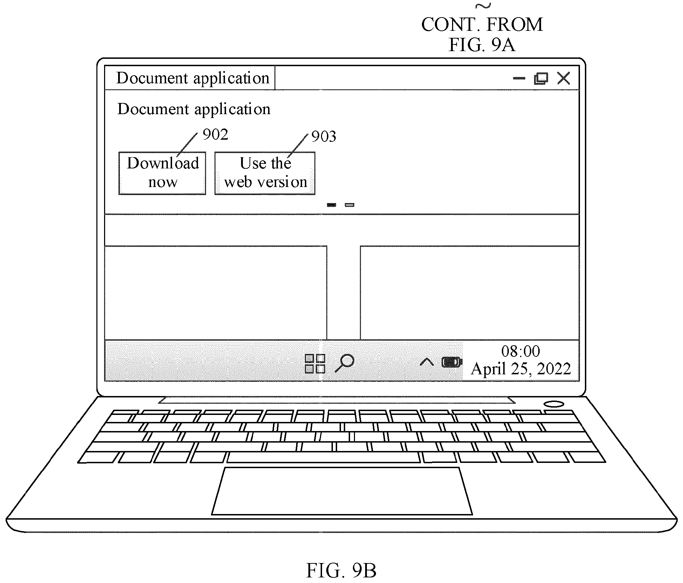

For example, when the second device receives a trigger operation performed by a user on a handoff application with a handoff bubble and the handoff application is installed on the second device, the second device may open the handoff application and continue to display the handoff application based on an application handoff status on the first device (refer to an embodiment corresponding to FIG. 6A and FIG. 6B). Alternatively, when the second device receives a trigger operation performed by a user on a handoff application with a handoff bubble and the handoff application is not installed on the second device but the second device has an installation package for the handoff application, the second device may guide the user to download the handoff application (refer to embodiments corresponding to FIG. 7A, FIG. 7B, FIG. 7C, FIG. 7D, and FIG. 7E and FIG. 8A, FIG. 8B, and FIG. 8C). Alternatively, when the second device receives a trigger operation performed by a user on a handoff application with a handoff bubble, the handoff application is not installed on the second device, and the second device does not have an installation package for the handoff application, the second device may be redirected to a browser to open a web version of the handoff application (refer to an embodiment corresponding to FIG. 9A and FIG. 9B).

In an implementation, when the second device receives a trigger operation performed by a user on a handoff application with a handoff bubble and the handoff application is installed on the second device, the second device may open the handoff application and continue to display the handoff application based on an application handoff status on the first device. For example, FIG. 6A and FIG. 6B are a schematic diagram of an interface for displaying a handoff application on a second device according to an embodiment that does not relate to the subject matter of the enclosed claims.

The second device displays an interface shown in FIG. 6A. The interface shown in FIG. 6A may include an icon of a document application 601 with a handoff bubble. Content displayed on the interface may be similar to that displayed on the interface shown in FIG. 5C. Details are not described herein again.

On the interface shown in FIG. 6A, when the second device receives a trigger operation performed by a user on the document application 601 and the document application 601 is installed on the second device, the second device may display an interface shown in FIG. 6B. The interface shown in FIG. 6B may include display content of a document 600, a cursor 602, a control for minimizing the document application 601, a control for restoring the document application 601, a control for closing the document application 601, a control for viewing a file (or referred to as a File control), a Start control, an Insert control, a Design control, a Data control, a Process control, a Review control, a View control, and the like. A document handoff status of the document application 601 on the interface shown in FIG. 6B is the same as a document handoff status of the document application on the first device on the interface shown in FIG. 5A. For example, a location of the cursor 602 is the same as a location of the cursor 504 on the interface shown in FIG. 5A. This may be understood as that content of a handoff application displayed on the second device on the interface shown in FIG. 6B is related to content of a handoff application displayed on the first device on the interface shown in FIG. 5A.

The document handoff status may include document content, a cursor location in the document content, a revision mark in the document, and the like.

In a possible implementation, as shown in FIG. 4, the second device may determine, based on installed applications stored in the package manager service module, whether the document application is installed on the second device.

It can be understood that, during application handoff, the second device can implement synchronization of content such as a file status and a cursor location in a document application 601 on the first device, so that a document handoff status after handoff is the same as a document handoff status on the first device before handoff, thereby improving user experience for an application handoff function.

In a possible implementation, before a handoff function is implemented, a user may alternatively log in by using an account for the document application 601 on the second device in advance, so that the second device can directly open the document application 601 and continue to display document content when receiving a trigger operation performed by a user on a handoff application with a handoff bubble. Alternatively, if the user does not log in to the document application 601 in advance, when the second device receives a click operation performed by a user on the document application 601 with a handoff bubble, the second device may display a pop-up window for indicating the user to log in by using an account for the document application 601, and continue to display document content after the user logs in by using the account.

It can be understood that, when the user does not log in on the second device by using the account for the document application, the second device may not be able to take over the handoff function initiated by the first device. The document content in the document application may be obtained from a third-party APP service cloud based on the account used for logging in to the document application.

In a possible implementation, when the user does not log in on the second device by using the account for the document application, the second device may take over the handoff function initiated by the first device. The document content in the document application may be transmitted by the first device to the second device based on data exchange between the devices.

In a possible implementation, when the second device receives a trigger operation performed by a user on the document application 601 with a handoff bubble and the document application 601 is installed on the second device, the second device may also determine a handoff policy based on a version status of the document application 601 installed on the second device. For example, when the second device determines that a version of the document application 601 is the same as a version of the document application 601 on the first device, the second device may continue to complete handoff. Alternatively, when the second device determines that the version of the document application 601 is earlier than the version of the document application 601 on the first device, the second device may initiate a version upgrade prompt, so that the second device can update the version of the document application 601.

Based on this, when the first device initiates application handoff, a user may trigger a handoff application with a handoff bubble on the second device, to conveniently implement application handoff and improve user experience for interactive use between devices.

In another implementation, when the second device receives a trigger operation performed by a user on a handoff application with a handoff bubble and the handoff application is not installed on the second device (or the handoff application is not installed, but the second device has an installation package for the handoff application), the second device may guide the user to download the handoff application.

For example, FIG. 7A, FIG. 7B, FIG. 7C, FIG. 7D, and FIG. 7E are a schematic diagram of an interface for installing a handoff application on a second device according to an embodiment of this application.

The second device displays an interface shown in FIG. 7A. When the second device receives a trigger operation performed by a user on a document application 701 with a handoff bubble and the document application is not installed on the second device but the second device has an installation package for the document application, the second device may display an interface shown in FIG. 7B.

In a possible implementation, as shown in FIG. 4, the second device may query, based on application installation packages that are stored in the package manager service module and that are not installed or based on application installation packages in the app store, whether the second device has the installation package for the document application.

The interface shown in FIG. 7A may include an icon of the document application 701 with the handoff bubble. Content displayed on the interface may be similar to that displayed on the interface shown in FIG. 5C. Details are not described herein again.

The interface shown in FIG. 7B may include a pop-up window 702. The pop-up window 702 may include an icon of the document application, text information for indicating installation, text information for indicating effect after installation, a control for canceling installation (or referred to as a Cancel control), a control for immediate installation (or referred to as an Install now control), and the like. The text information for indicating installation may be displayed as follows: Install the document application and experience super-handoff. The text information for indicating effect after installation may be displayed as follows: After installation, you can seamlessly hand off a file that you are viewing on your mobile phone to a computer with one click, and continue to read or edit the file on the computer. The control for canceling installation may be displayed as Cancel. The control for immediate installation may be displayed as Install now.

In a possible implementation, on the interface shown in FIG. 7A, when the second device receives a trigger operation performed by a user on the document application 701 with the handoff bubble and the document application is not installed on the second device but the second device has the installation package for the document application, the second device may display an interface shown in FIG. 7D.

It can be understood that the pop-up window 702 may be an interactive pop-up window, and the pop-up window 702 may be a full-screen or non-full-screen interface. Content displayed in the pop-up window 702 is not limited in this embodiment of this application.

On the interface shown in FIG. 7B, when the second device receives a trigger operation performed by a user on the control for immediate installation in the pop-up window 702, the second device may display an interface shown in FIG. 7C. The interface shown in FIG. 7C may include a pop-up window 703. The pop-up window 703 may include an icon of the document application, text information for indicating that downloading is ongoing, a progress bar for indicating a download progress, numerical information for indicating a download progress, and the like. The text information for indicating that downloading is ongoing may be displayed as follows: Downloading the document application... The numerical information for indicating the download progress may be displayed as 125 MB/234 MB.

It can be understood, on the interface shown in FIG. 7B, when the second device receives a trigger operation performed by a user on the control for immediate installation in the pop-up window 702, the second device may install the document application, and display an interface shown in FIG. 7E after the installation ends.

In a possible implementation, after downloading of the document application is completed, the second device may display the interface shown in FIG. 7D. The interface may include a pop-up window 704. The pop-up window 704 may include an icon of the document application, information for indicating a version of the document application, a control for indicating custom settings, text information for indicating installation instructions, a check button, a control for indicating immediate installation (or referred to as an Install now control), and the like. The information for indicating the version of the document application may be displayed as V1.0. The text information for indicating installation instructions may be displayed as follows: I have read and agree to the license agreement and privacy policy for the document application.

It can be understood that, on the interface shown in FIG. 7D, when the second device receives a trigger operation performed by a user on the control for indicating immediate installation, the second device may install the document application, so that the installed document application can implement the handoff function initiated by the first device.

In a possible implementation, after the second device completes installation of the document application, the second device may re-display the icon of the document application 701 and the handoff bubble, for example, display the interface shown in FIG. 7E. Content displayed on the interface shown in FIG. 7E is similar to the content displayed on the interface shown in FIG. 7A. Details are not described herein again. On the interface shown in FIG. 7E, when the second device receives a trigger operation performed by a user on the icon of the document application 701 herein, the second device may continue to display content of the document application displayed on the first device.

Based on this, the second device may install, based on triggering by a user for an icon of a handoff application, a handoff application that is not installed, re-display the icon of the handoff application after the installation ends, and then continue, based on a trigger operation performed by the user on the re-displayed icon of the handoff application, to display content of the handoff application displayed on the first device.

In a possible implementation, when the second device has downloaded the document application, the second device needs to continue to log in to the document application by using an account. For example, FIG. 8A, FIG. 8B, and FIG. 8C are a schematic diagram of an interface for login of an application account on a second device according to an embodiment of this application.

In a possible implementation, after the second device completes installation of the document application on the interface shown in FIG. 7D, the second device may display an interface shown in FIG. 8A. The interface may include a pop-up window 801. The pop-up window 801 may include an icon of the document application, an icon of the first device, text information for indicating login of an application account, a two-dimensional code for login, a control for switching to another login method, and text information for indicating authorization for a document application account and a device account. The text information for indicating login of an application account may be displayed as follows: Scan to log in by using the document application account. Open the album of your mobile phone, tap the "Scan" icon in the upper left corner, and scan the two-dimensional code below. The text information for indicating authorization for a document application account and a device account may be displayed as follows: Read the authorization service agreement for the document application account and the device account.

It can be understood that the pop-up window 801 may implement the following: When a user uses the first device to scan the two-dimensional code in the pop-up window 801, the second device can directly log in to an account of a document application on the first device by using a personal device account of the first device.

When the second device logs in to the account of the document application on the first device based on the interface shown in FIG. 8A, a user may turn on the screen in the document application on the first device, trigger any control in the document application, or switch from another application to the document application. In response to any one of the foregoing operations, the first device re-initiates the handoff function, so that the second device can display an interface shown in FIG. 8B. Content displayed on the interface may be similar to that displayed on the interface shown in FIG. 5C. Details are not described herein again.

In a possible implementation, when the second device logs in to the account of the document application on the first device based on the interface shown in FIG. 8A, the second device may also display the interface shown in FIG. 8B by default, and then continue, based on a trigger operation performed by a user on an icon of a document application 802, to display content of the document application displayed on the first device.

In a possible implementation, the second device may alternatively automatically implement handoff for the document application after logging in to the account of the document application on the first device. In this scenario, the user does not need to re-trigger the handoff function on the first device or trigger the icon of the handoff application on the second device.

On the interface shown in FIG. 8B, when the second device receives a trigger operation performed by a user on the document application 802, the second device may display an interface shown in FIG. 8C. On the interface shown in FIG. 8C, a document handoff status of the document application on the interface is the same as a document handoff status of the document application on the first device on the interface shown in FIG. 5A. For example, a location of a cursor 803 is the same as a location of the cursor 504 on the interface shown in FIG. 5A. For the document handoff status, refer to the descriptions of the embodiment corresponding to FIG. 6A and FIG. 6B. Details are not described herein again. This may be understood as that content of a handoff application displayed on the second device on the interface shown in FIG. 8C is related to content of a handoff application displayed on the first device on the interface shown in FIG. 5A.

Based on this, even if a handoff application is not installed on the second device, the handoff application may be installed through a series of installation operations, and an application handoff status of the handoff application may continue to be displayed.

In still another implementation, when the second device receives a trigger operation performed by a user on a handoff application with a handoff bubble, the handoff application is not installed on the second device, and the second device does not have an installation package for the handoff application, the second device may be redirected to a browser to open a web version of the handoff application. For example, FIG. 9A and FIG. 9B are a schematic diagram of an interface for opening a browser on a second device according to an embodiment that does not relate to the subject matter of the enclosed claims.

The second device displays an interface shown in FIG. 9A. When the second device receives a trigger operation performed by a user on a document application 901 with a handoff bubble, the document application is not installed on the second device, and the second device does not have an installation package for the document application, the second device may open a preset browser, and display a web version of the document application when the document application is found in the browser. For example, the second device displays an interface shown in FIG. 9B.

In a possible implementation, the second device displays the interface shown in FIG. 9A. When the second device receives a trigger operation performed by a user on the document application 901 with the handoff bubble, the document application is not installed on the second device, and the second device does not have the installation package for the document application, the second device may alternatively indicate the user to download the installation package for the document application from the app store, and when the second device obtains the installation package for the document application, install the document application based on an operation performed by the user for installing the document application. Further, the second device may re-display an icon of the document application and a handoff bubble, so that the user can continue, based on a trigger operation performed on the icon of the document application, to display content of the document application displayed on the first interface.

The interface shown in FIG. 9A may include an icon of the document application 901 with the handoff bubble. Content displayed on the interface may be similar to that displayed on the interface shown in FIG. 5C. Details are not described herein again. The interface shown in FIG. 9B may include a control for minimizing a web page, a control for resizing a web page, a control for closing a web page, a control 902 for downloading the document application, a control 903 for using a web version of the document application, and other text information or picture information. This is not limited in this embodiment of this application.

In a possible implementation, on the interface shown in FIG. 9B, the second device may display the web version of the document application when the second device receives a trigger operation performed by a user on the control 903 for using the web version of the document application. Then, in the web version of the document application, the second device may open the document application based on a user operation and log in to an account of the document application. Further, when the first device receives an operation performed by a user for turning on the screen, triggering any control in the document application, or switching from another application to the document application, in response to any one of the foregoing operations, the first device may re-initiate the handoff function, so that the second device can continue to implement the handoff function in the web version of the document application.

In a possible implementation, on the interface shown in FIG. 9B, the second device may download the document application when the second device receives a trigger operation performed by a user on the control 902 for downloading the document application. After the downloading ends, the second device may open the document application based on a user operation and log in to an account of the document application. Further, when the first device receives an operation performed by a user for turning on the screen, triggering any control in the document application, or switching from another application to the document application, in response to any one of the foregoing operations, the first device may re-initiate the handoff function, so that the second device can continue to implement the handoff function after downloading the document application. Alternatively, after opening the document application and logging in to the account of the document application, the second device may re-display an icon of the document application and a handoff bubble, so that the user can continue, based on a trigger operation performed on the icon of the document application, to display content of the document application displayed on the first interface.

Based on this, when a handoff application is not installed on the second device and an installation package for the handoff application cannot be found, a web version of the handoff application may be opened from a browser, so that a user can continue to complete a handoff function in the web version of the handoff application. Alternatively, when a handoff application is not installed on the second device but an installation package for the handoff application can be found from the app store, a user may download the installation package for the handoff application from the app store and continue to complete a handoff function. This expands application scenarios of the handoff function, and improves user experience for interactive use between devices.

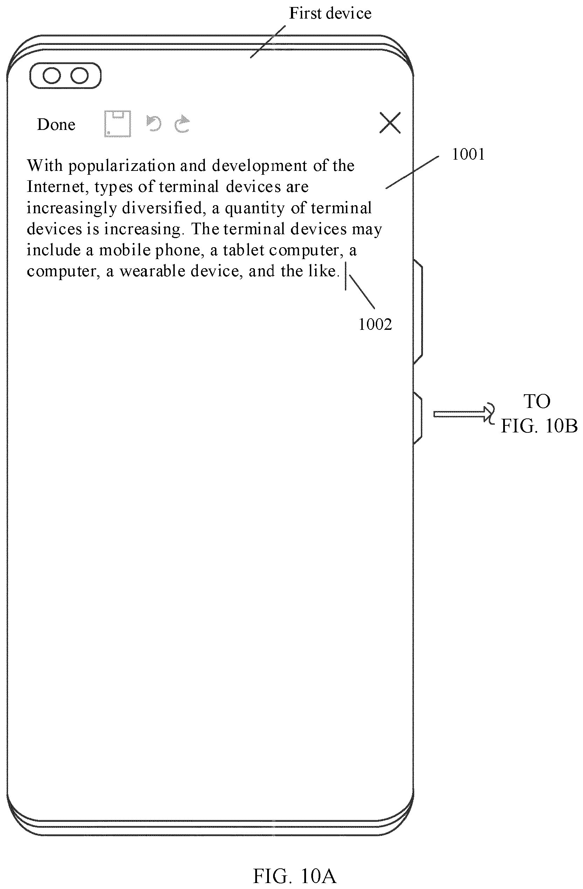

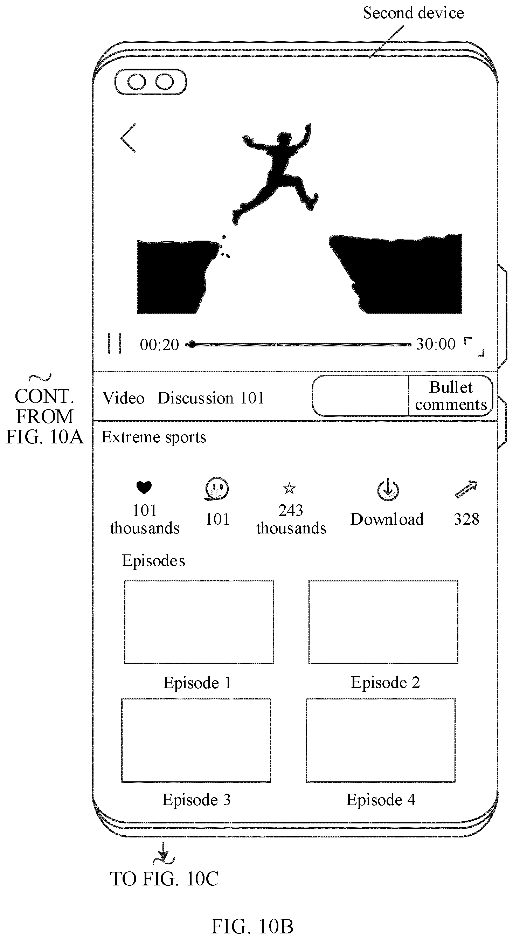

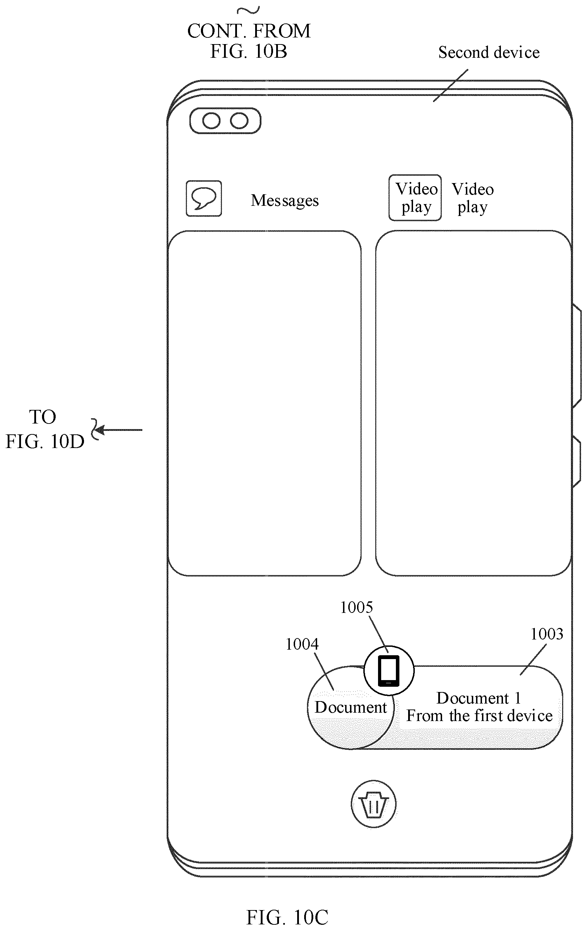

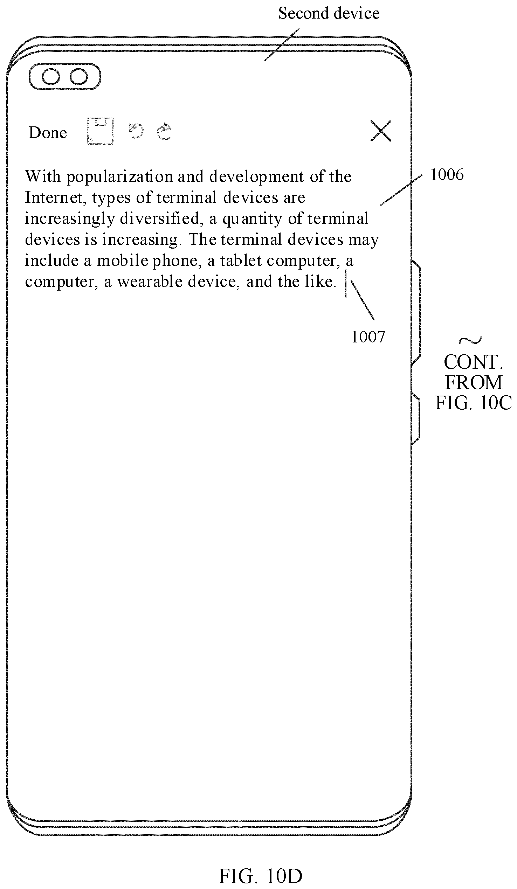

In a possible implementation, in an office scenario, when a first device is a mobile phone and a second device is also a mobile phone, the second device may complete a handoff function based on a pop-up window displayed on a background multitasking interface. FIG. 10A, FIG. 10B, FIG. 10C, and FIG. 10D are a schematic diagram of another office scenario according to an embodiment of this application.

When a first device receives an operation of editing, by a user, a document in a document application, the first device may display an interface shown in FIG. 10A. The interface may include document content 1001 and a cursor 1002. For content displayed on the interface shown in FIG. 10A, refer to the content shown in FIG. 5A. Details are not described herein again.

In the scenario corresponding to FIG. 10A, FIG. 10B, FIG. 10C, and FIG. 10D, when the first device and the second device meet a handoff condition, and when the first device starts a document application shown in FIG. 10A and the document application has a handoff function, the first device may send an icon of the document application and a message for indicating handoff to the second device.

That the first device and the second device meet the handoff condition may be that the first device and the second device belong to a same trust ring.

In a possible implementation, the second device displays an interface shown in FIG. 10B. The interface may be a video play interface. It can be understood that the second device may display another application before a user receives a handoff function initiated by the first device. For example, on the interface shown in FIG. 10B, the second device may continue to display the interface shown in FIG. 10B when the second device receives the icon of the document application and the message for indicating handoff that are sent by the first device.

The interface shown in FIG. 10B may include video content, a control for exiting video play, a control for pausing a video, a progress bar for indicating a progress of a video, a control for zoom-in on a video, a text box for entering bullet comments, a control for viewing discussion content, a control for adding a video to favorites, a control for downloading a video, a control for sharing a video, and the like. The interface may further include an icon for viewing Episode 1, an icon for viewing Episode 2, an icon for viewing Episode 3, an icon for viewing Episode 4, and the like.

On the interface shown in FIG. 10B, when the second device receives an operation of swiping up by a user from the bottom of the screen, the second device may display a background multitasking interface. For example, the second device displays an interface shown in FIG. 10C. The interface shown in FIG. 10C may include a pop-up window 1003, a control for deleting a background application, an icon of a message application, a thumbnail corresponding to the message application, an icon of a video play applications, and a thumbnail corresponding to the video play application. The pop-up window 1003 includes an icon 1004 of a document application, a handoff bubble 1005 around the document application, text information for indicating that handoff is initiated by the first device, text information for indicating a document title for handoff, and the like. The text information for indicating a document title for handoff is displayed as Document 1.

On the interface shown in FIG. 10C, when the second device receives a trigger operation performed by a user on the pop-up window 1003 (or the icon 1004 of the document application) and the document application is installed on the second device, the second device may display an interface shown in FIG. 10D. The interface shown in FIG. 10D may include document content 1006 and a cursor 1007. Content of the document content 1006 may be the same as that of the document content 1001 on the interface shown in FIG. 10A, and a location of the cursor 1007 and other handoff data may be the same as that of the cursor 1002 on the interface shown in FIG. 10A. For other content displayed on the interface, refer to the content shown in FIG. 5A. Details are not described herein again.

Based on this, when a user uses another application (or views another interface) on the second device (for example, a mobile phone), the user cannot view a handoff application with a handoff bubble on an interface on which the another application is located, and can view the handoff application with the handoff bubble on the background multitasking interface of the second device. This can prevent the handoff function from affecting use of another application by a user.

### Scenario 2: application handoff method in a video play scenario

In an embodiment corresponding to the scenario 2, an example in which a handoff application is a video play application is used for description, but this example does not constitute a limitation on this embodiment of this application.

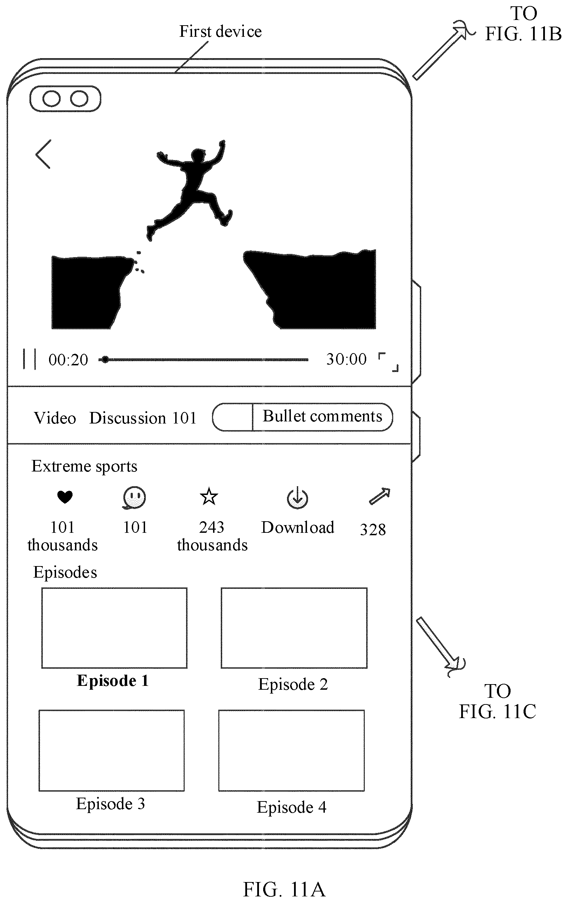

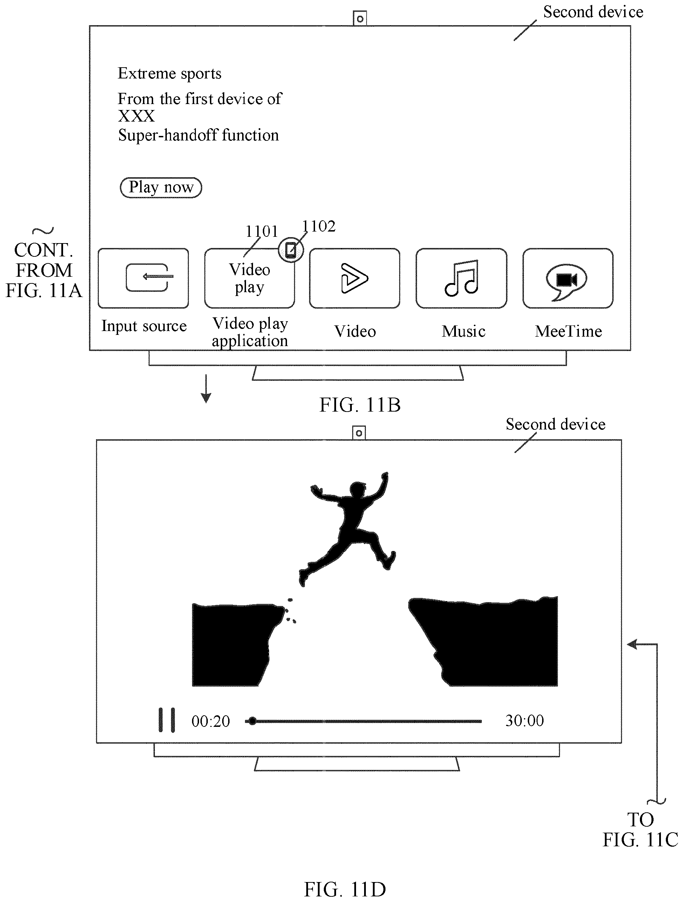

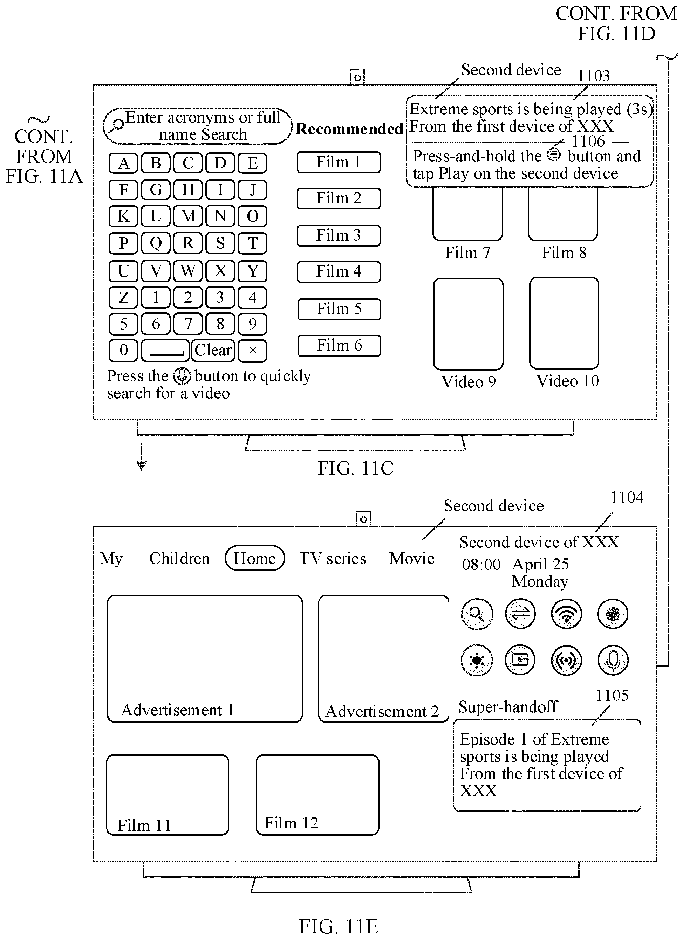

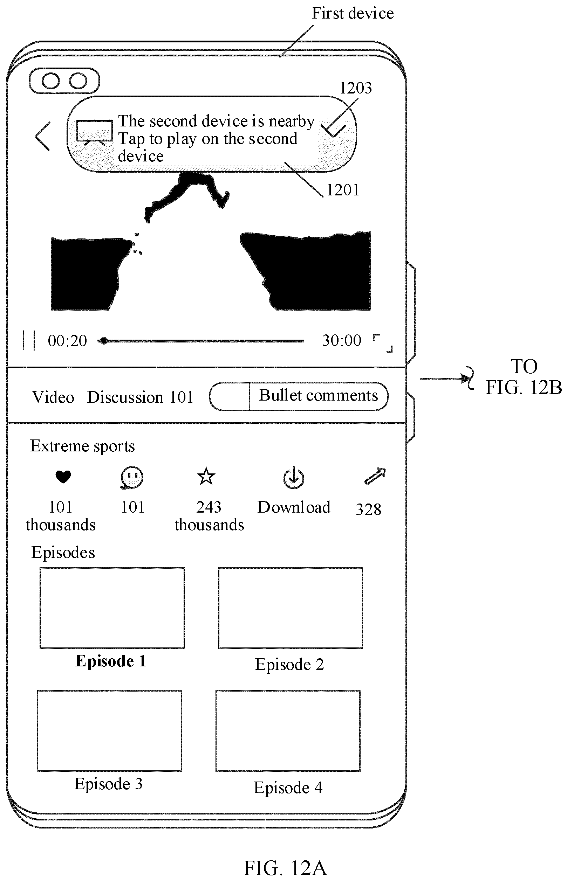

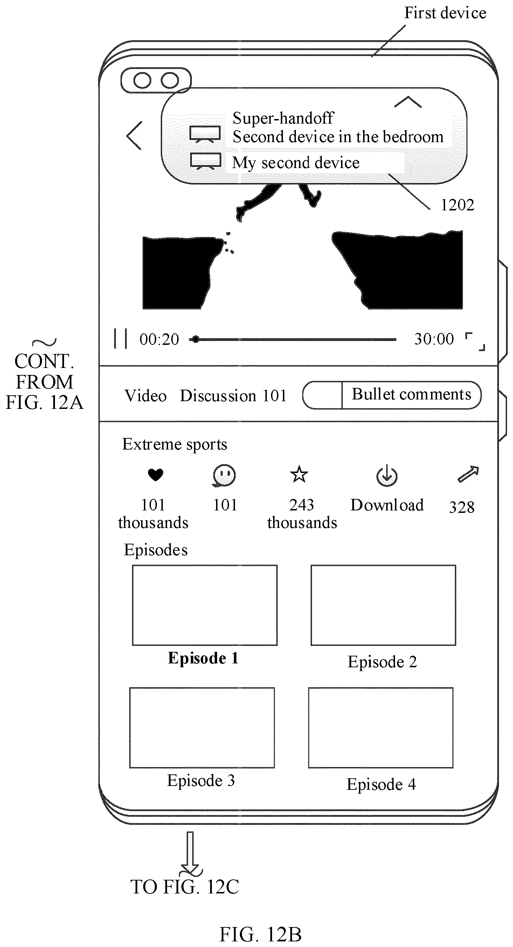

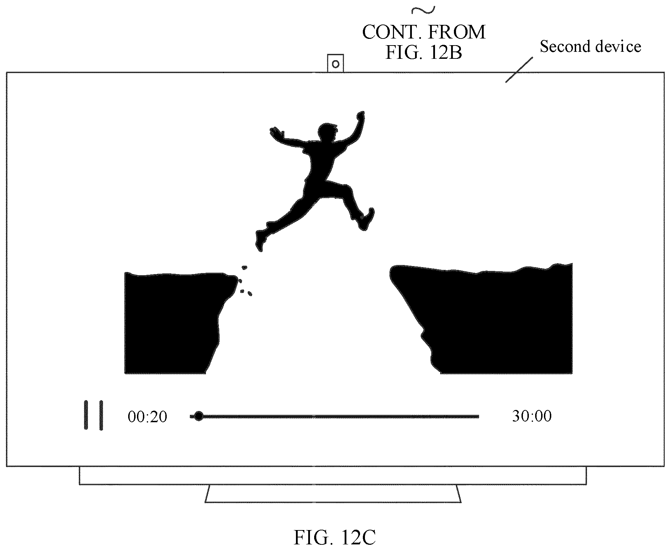

In the scenario 2, two application handoff methods can be supported between a first device and a second device. Method 1: The second device implements application handoff based on triggering by a user for a handoff application with a handoff bubble on the second device (refer to an embodiment corresponding to FIG. 11A, FIG. 11B, FIG. 11C, FIG. 11D, and FIG. 11E). Method 2: The first device implements application handoff based on triggering by a user for a control, on the first device, that is used for handoff to the second device (refer to an embodiment corresponding to FIG. 12A, FIG. 12B, and FIG. 12C).

Method 1: The second device implements application handoff based on triggering by a user for a handoff application with a handoff bubble on the second device.

For example, FIG. 11A, FIG. 11B, FIG. 11C, FIG. 11D, and FIG. 11E are a schematic diagram of a video play scenario according to an embodiment of this application. As shown in FIG. 11A, FIG. 11B, FIG. 11C, FIG. 11D, and FIG. 11E, the video play scenario may include a first device and a second device. An example in which the first device is a mobile phone and the second device is a large screen is used for description.

When the first device receives an operation of opening, by a user, video content in a video play application, the first device may display an interface shown in FIG. 11A. Content displayed on the interface may be the same as that displayed on the interface shown in FIG. 10B. Details are not described herein again.

In the scenario corresponding to FIG. 11A, FIG. 11B, FIG. 11C, FIG. 11D, and FIG. 11E, when the first device and the second device meet a handoff condition, and when video content in a video play application shown in FIG. 11A is viewed on the first device and the video play application has a handoff function, the first device may send an icon of the video play application and a message for indicating handoff to the second device, so that the second device can display an interface shown in FIG. 11B on a boot interface of the large screen, or the second device can display an interface shown in FIG. 11C on a content interface of the large screen. The boot interface may be an interface displayed when the second device is started. The content interface may be an interface displayed after the second device receives triggering by a user for any function on the boot interface.

In an implementation, when the first device initiates a handoff function, the second device may display a card for a video play application 1101 (or referred to as an icon of the video play application) and a handoff bubble 1102 around the card for the video play application 1101 on the boot interface shown in FIG. 11B.

The boot interface shown in FIG. 11B further includes text information for indicating video content for handoff, text information for indicating a device for handoff, text information for indicating that application handoff is ongoing, a control for indicating to immediately play a handoff video (or referred to as a Play now control), and the like. The interface may further include a card for an input source application, a card for a video application, a card for a music application, a card for a MeeTime application, and the like. The text information for indicating video content for handoff is displayed as Extreme sports. The text information for indicating a device for handoff is displayed as From the first device of XXX, where XXX may be a name of a personal device account of the first device. The text information for indicating that application handoff is ongoing may be displayed as Super-handoff function.

It can be understood that, when the second device receives the message for indicating handoff that is sent by the first device, the second device may insert the card for the video play application 1101 between the card for the input source and the card of the video application, so that a user can be aware of an application handoff status on the second device in a timely manner.

On the boot interface shown in FIG. 11B, when the second device receives a trigger operation performed by a user on the card for the video play application 1101 or the Play now control, the second device may display an interface shown in FIG. 11D. The interface shown in FIG. 11D may include video content handed off from the first device, and status data of the video play application, such as play time and a progress bar in the video, may be the same as that on the interface shown in FIG. 11A. This may be understood as that content of a handoff application displayed on the second device on the interface shown in FIG. 11D is related to content of a handoff application displayed on the first device on the interface shown in FIG. 11A.

In a possible implementation, when duration in which a focus of the first device is on the video play application exceeds a time threshold, the focus of the first device may disappear from the video play application. Then the first device may re-initiate the handoff function to the second device based on a tap operation performed by a user on the video play application

A trigger operation performed on the video play application 1101 may be as follows: A user uses a remote control to move a focus of the second device to a location of the video play application 1101, and a press operation performed by the user on an OK button on the remote control is received. A trigger operation performed on the Play now control may be as follows: A user uses a remote control to move a focus to a location of the Play now control, and a press operation performed by the user on an OK button on the remote control is received.

Based on this, a user may trigger a card for a handoff application on the boot interface of the second device (for example, a large screen) to conveniently implement handoff for video content in the handoff application by using the second device.

In another implementation, when the first device initiates the handoff function, the second device may display a pop-up window 1103 for indicating a handoff prompt on the content interface shown in FIG. 11C. The pop-up window 1103 includes text information for indicating a film played in a handoff application, text information for indicating a device from which the handoff application comes, and prompt information for indicating to trigger the handoff application in a menu.

The interface shown in FIG. 11C may further include a text box for searching for a video, a keyboard icon, text information for indicating voice search, a plurality of recommended films, and the like. The text information for indicating a film played in a handoff application is displayed as follows: Extreme sports is being played (3s). The text information for indicating a device from which the handoff application comes is displayed as From the first device of XX. The prompt information for indicating to trigger the handoff application in a menu may be displayed as follows: Press-and-hold the menu button 1106 (the menu button 1106 may be displayed as a graph including three bars), and tap Play on the second device. The text information for indicating voice search may be displayed as follows: Press the voice search button to quickly search for a film. The plurality of recommended films may include a film 1, a film 2, a film 3, a film 4, a film 5, a film 6, a film 7, a film 8, a film 9, and a film 10.

In a possible implementation, when the second device receives a handoff function initiated by the first device for the first N times, the second device may display the pop-up window 1103, so that the pop-up window 1103 indicates a user to implement handoff on the interface on which the menu is located. In a possible implementation, when the second device receives a handoff function initiated by the first device for an (N+1)th time, the second device may not display the pop-up window 1103. N may be an integer greater than or equal to 1.

On the interface shown in FIG. 11C, when the second device receives an operation of pressing-and-holding, by a user, a menu button on a remote control (the menu button on the remote control may be displayed as the graph of the menu button 1106 shown in FIG. 11C), the second device may display an interface shown in FIG. 11E. The interface shown in FIG. 11E may include a menu 1104. The menu 1104 may include prompt information 1105 for indicating content displayed in a handoff application. The prompt information 1105 may be displayed as follows: Episode 1 of Extreme sports is being played, which comes from the first device of XXX. The menu 1104 may further include a date for indicating time and date, a search control, a mobile data control, a Wi-Fi control, a control for adjusting brightness, a control for viewing an input source, a device sharing control, and a voice control, and the like. It can be understood that the interface shown in FIG. 11E may also display other content in addition to the menu 1104. This is not limited in this embodiment of this application.

It can be understood that, to avoid affecting normal use of other applications on the second device by the user, the user may use the menu button on the remote control to open the menu 1104, and complete handoff by triggering the prompt information 1105 in the menu 1104.

On the interface shown in FIG. 11E, when the second device receives a trigger operation performed by a user on the prompt information 1105, the second device may display the interface shown in FIG. 11D. The trigger operation performed on the prompt information 1105 may be as follows: A user uses a remote control to move a focus to a location of the prompt information 1105, and a press operation performed by the user on an OK button on the remote control is received.

In a possible implementation, when the second device displays the menu 1104 shown in FIG. 11E, and when the first device initiates the handoff function, the second device may directly display the prompt information 1105 in the menu 1104, and display the interface shown in FIG. 11D based on an operation performed by a user on the prompt information 1105.

Based on this, a user may trigger prompt information indicating handoff content on a menu interface of the second device (for example, a large screen) to conveniently implement handoff for video content in a video play application.

Method 2: The first device implements application handoff based on triggering by a user for a control, on the first device, that is used for handoff to the second device.

For example, FIG. 12A, FIG. 12B, and FIG. 12C are a schematic diagram of another video play scenario according to an embodiment of this application.

In the scenario corresponding to FIG. 12A, FIG. 12B, and FIG. 12C, when the first device and the second device meet a handoff condition, and when video content in a video play application shown in FIG. 12A is viewed on the first device, a pop-up window 1201 may be displayed on the interface shown in FIG. 12A. The pop-up window 1201 may include an icon of the second device, text information for indicating that the second device is detected, and a control 1203 for indicating to view the second device. The icon of the second device may be displayed as a large screen. The text information for indicating that the second device is detected may be displayed as follows: The second device is nearby. Tap to play on the second device.

On the interface shown in FIG. 12A, when the first device receives a trigger operation performed by a user on the pop-up window 1201 (or the control 1203 for indicating to view the second device), the first device may display an interface shown in FIG. 12B. The interface shown in FIG. 12B may include a pop-up window 1202. The pop-up window 1202 may include a control for handoff to a second device in a bedroom, a control for handoff to my second device, and the like. The pop-up window 1202 is used for displaying a second device that is detected by the first device and that can implement a handoff function. Content displayed in the pop-up window 1202 is not limited in this embodiment of this application.

On the interface shown in FIG. 12B, when the first device receives a trigger operation performed by a user on the control for handoff to the second device in the bedroom in the pop-up window 1202, the first device may send a message for indicating handoff to the second device in the bedroom, so that the second device in the bedroom can display an interface shown in FIG. 12C. Video content that can be displayed on the interface shown in FIG. 12C is similar to video content on the interface shown in FIG. 12A. Details are not described herein again. This may be understood as that content of a handoff application displayed on the second device on the interface shown in FIG. 12C is related to content of a handoff application displayed on the first device on the interface shown in FIG. 12B.

It can be understood that, in the embodiment corresponding to FIG. 12A, FIG. 12B, and FIG. 12C, the second device may agree to a handoff function initiated by any first device by default, so that the second device can implement automatic handoff when the first device initiates handoff.

In a possible implementation, on the interface shown in FIG. 12B, when the first device receives a trigger operation performed by a user on the control for handoff to the second device in the bedroom in the pop-up window 1202, the first device may send a message for indicating handoff to the second device in the bedroom, so that the second device can display an icon of a handoff application and a handoff bubble. It can be understood that, when the second device displays the icon of the handoff application and the handoff bubble, for steps of implementing handoff by the second device, reference may be made to the descriptions of the interfaces corresponding to FIG. 11A, FIG. 11B, FIG. 11C, FIG. 11D, and FIG. 11E. Details are not described herein again.

Based on this, a user may specify a second device for handoff, and switch a handoff status in a handoff application on the first device to the specified second device, thereby improving user experience for a handoff function.

In a possible implementation, in a video play scenario, when a first device is a mobile phone and a second device is also a mobile phone, the second device may complete a handoff function based on a pop-up window displayed on a background multitasking interface.

In a possible implementation, when the first device initiates a handoff function and the second device displays a handoff application with a handoff bubble, the second device may receive a trigger operation performed by a user on the handoff application with the handoff bubble. Further, the second device may determine a handoff policy based on whether the handoff application is installed on the second device.

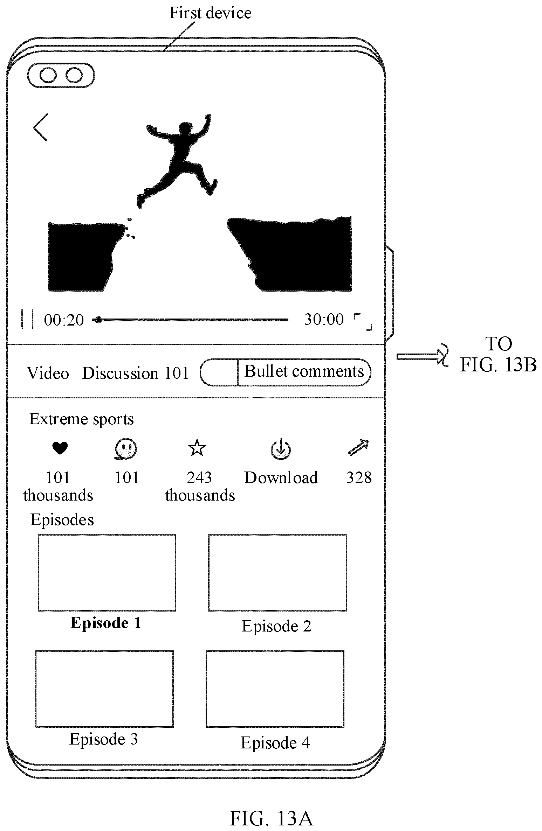

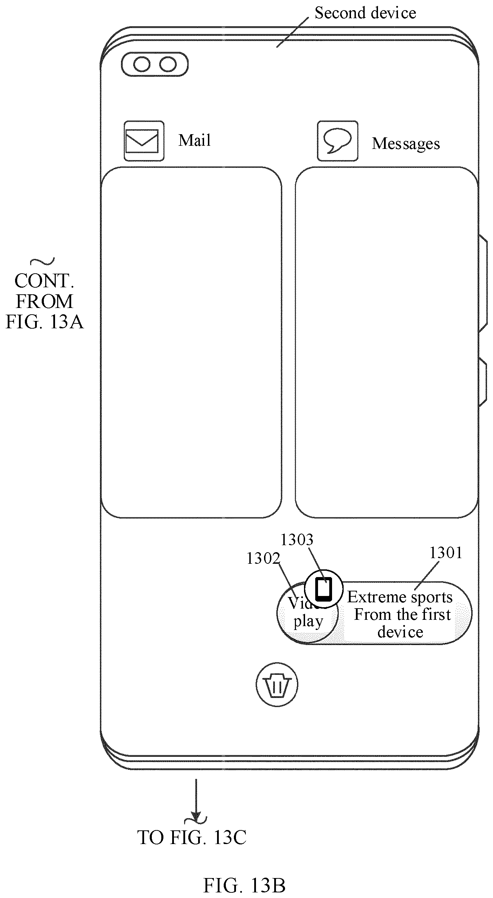

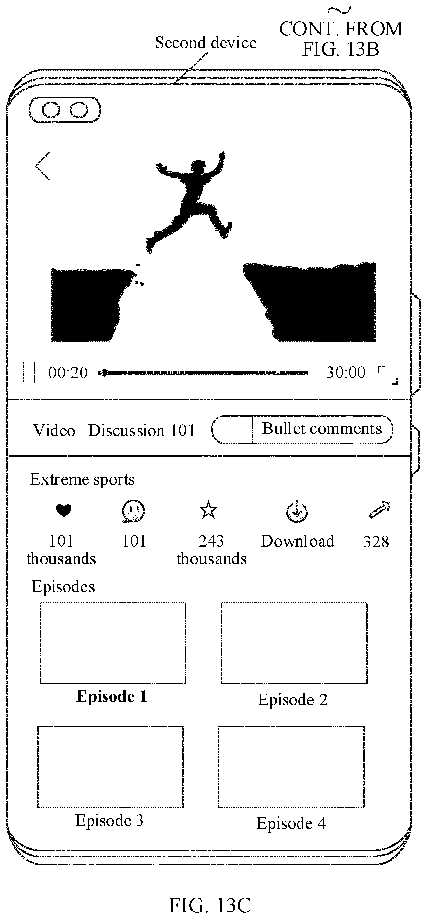

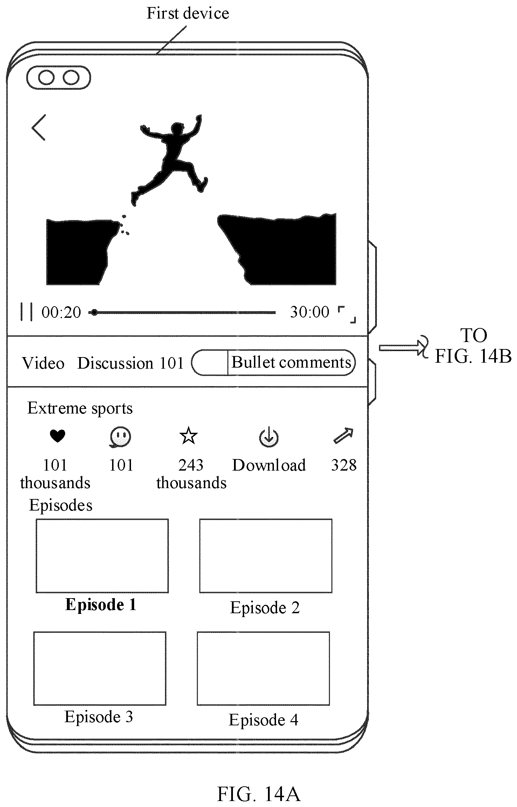

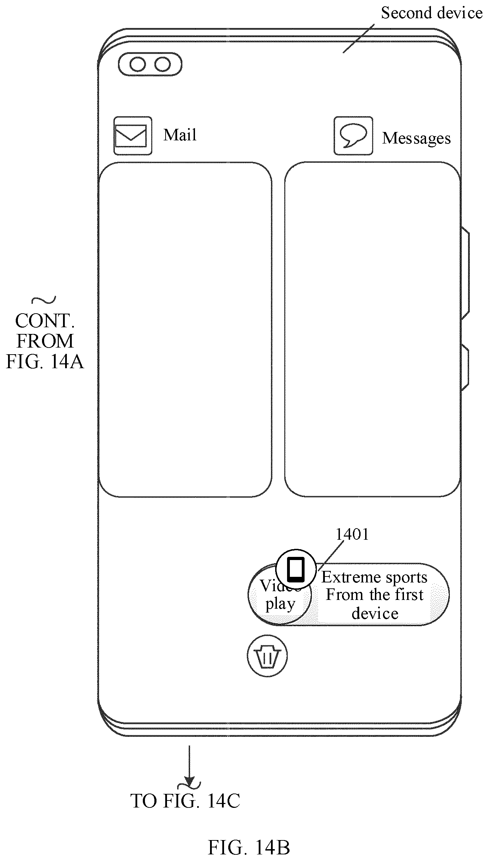

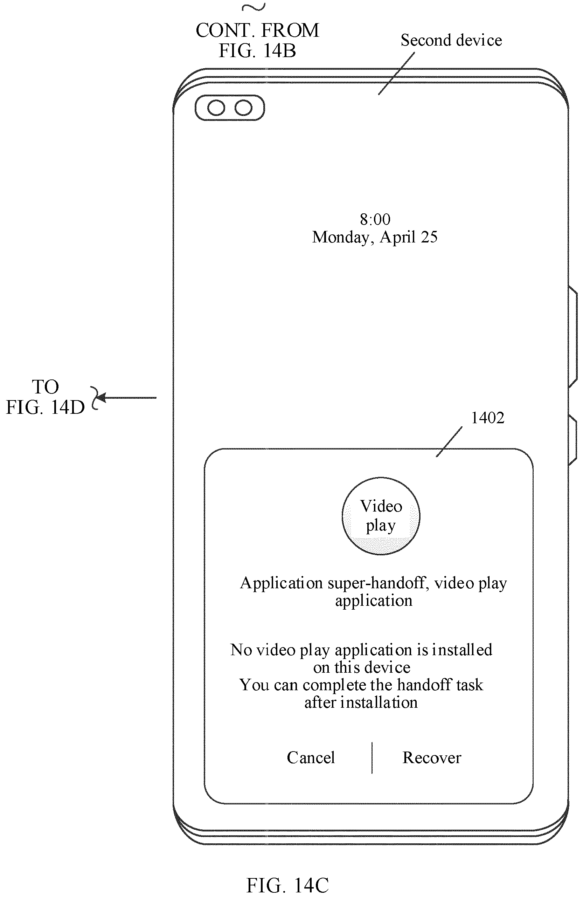

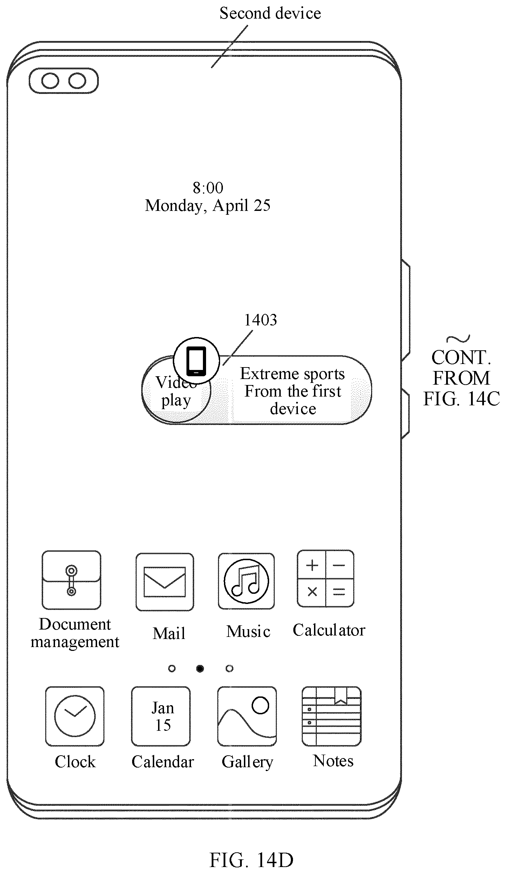

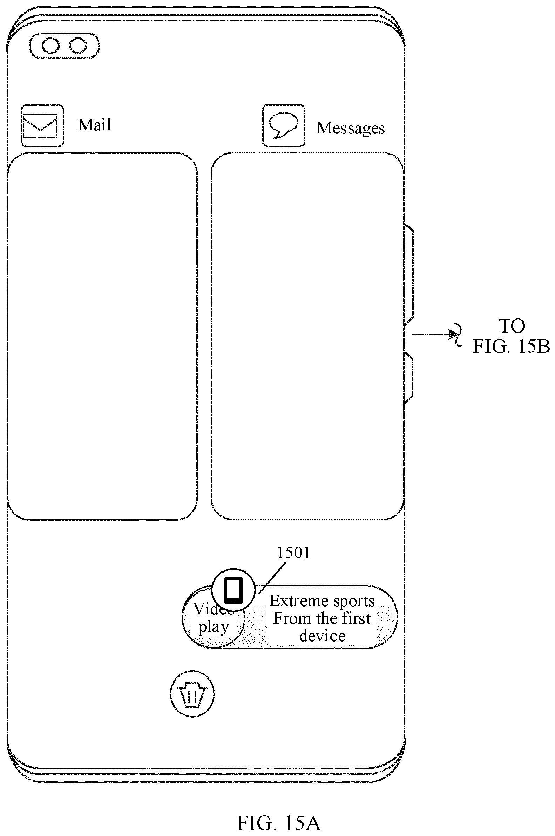

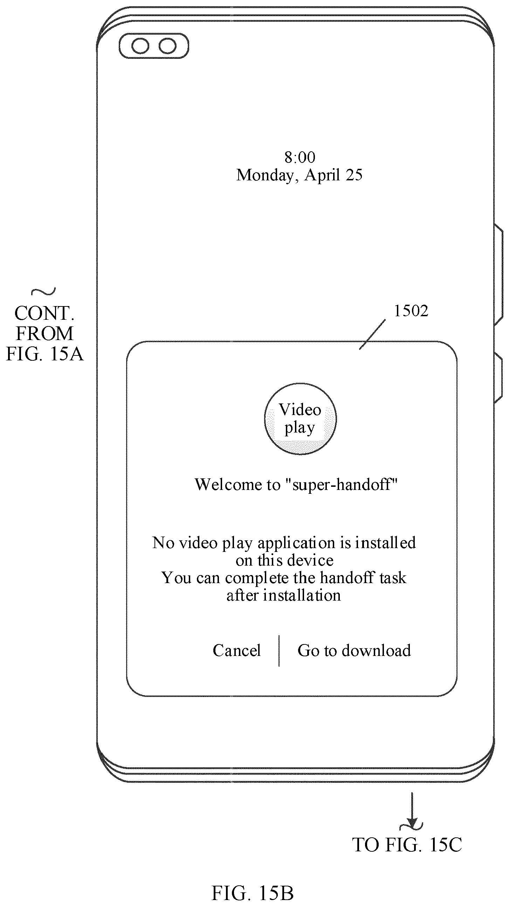

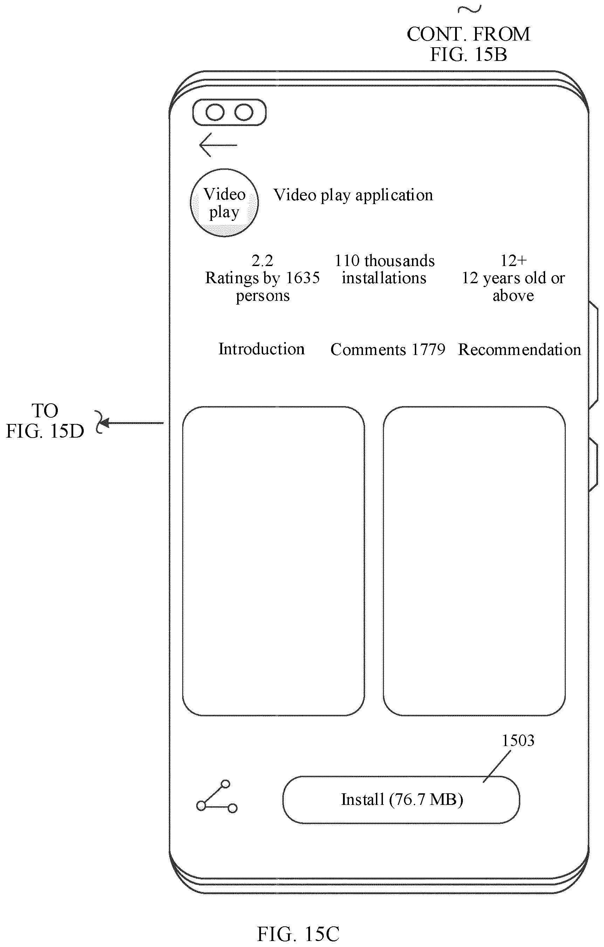

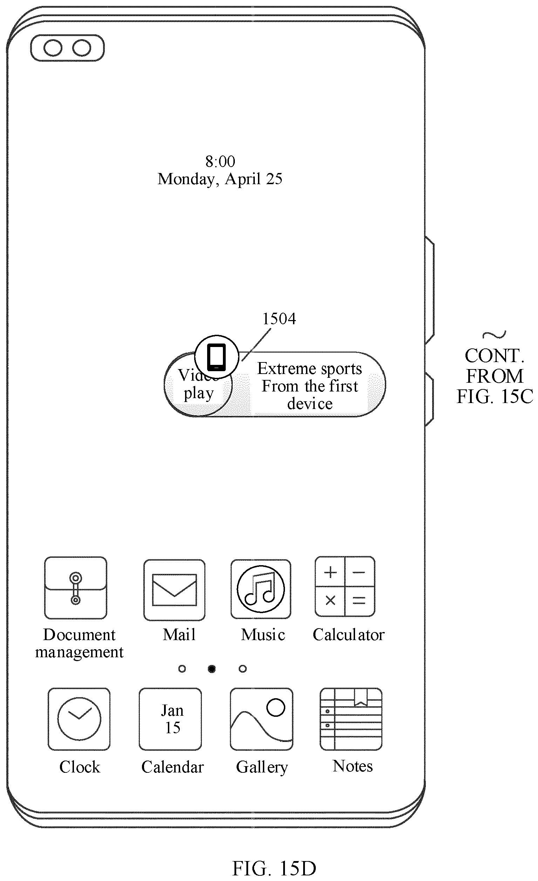

For example, when the second device receives a trigger operation performed by a user on a handoff application with a handoff bubble and the handoff application is installed on the second device, the second device may open the handoff application and continue to display the handoff application based on an application handoff status on the first device (refer to an embodiment corresponding to FIG. 13A, FIG. 13B, and FIG. 13C). Alternatively, when the second device receives a trigger operation performed by a user on a handoff application with a handoff bubble and the handoff application is not installed on the second device but the second device has an installation package for the handoff application, the second device may guide the user to download the handoff application (refer to an embodiment corresponding to FIG. 14A, FIG. 14B, FIG. 14C, and FIG. 14D or an embodiment corresponding to FIG. 15A, FIG. 15B, FIG. 15C, and FIG. 15D).

In an implementation, when the second device receives a trigger operation performed by a user on a handoff application with a handoff bubble and the handoff application is installed on the second device, the second device may open the handoff application and continue to display the handoff application based on an application handoff status on the first device. For example, FIG. 13A, FIG. 13B, and FIG. 13C are a schematic diagram of still another video play scenario according to an embodiment of this application.

In the scenario corresponding to FIG. 13A, FIG. 13B, and FIG. 13C, when the first device and the second device meet a handoff condition, and when the first device starts video content in a video play application shown in FIG. 13A and the video play application has a handoff function, the first device may send an icon of the video play application and a message for indicating handoff to the second device.

The second device receives the icon of the video play application and the message for indicating handoff that are sent by the first device. When the second device receives an operation of swiping up by a user from the bottom of the screen, the second device may display an interface shown in FIG. 13B. The interface may include a pop-up window 1301. The pop-up window 1301 includes an icon 1302 of a video play application, a handoff bubble 1303 around the video play application, text information for indicating that handoff is initiated by the first device, text information for indicating video content for handoff, and the like. The text information for indicating video content for handoff is displayed as Extreme sports.

On the interface shown in FIG. 13B, when the second device receives a trigger operation performed by a user on the pop-up window 1301 (or the icon 1302 of the video play application) and the video play application is installed on the second device, the second device may display an interface shown in FIG. 13C. A handoff status of the video play application on the interface shown in FIG. 13C may be consistent with a handoff status of the video play application on the interface shown in FIG. 13A. Details are not described herein again. This may be understood as that content of a handoff application displayed on the second device on the interface shown in FIG. 13C is related to content of a handoff application displayed on the first device on the interface shown in FIG. 13A.

The handoff status of the video play application may include video content, a play progress, an episode being played, information indicating whether to play, and the like.

It can be understood that, during handoff for a video play application, handoff data, such as a play progress, an episode being played, and information indicating whether to play, of the video play application may be sent by the first device to the second device, so that the second device can continue to play video content during handoff.

In another implementation, when the second device receives a trigger operation performed by a user on a handoff application with a handoff bubble and the handoff application is not installed on the second device but the second device has an installation package for the handoff application, the second device may guide the user to install the handoff application.

It can be understood that, in the scenario corresponding to FIG. 14A, FIG. 14B, FIG. 14C, and FIG. 14D, the handoff application may usually be a system application, and an installation package for the system application can be stored in a package manager service module of the second device during a system updated or device activation, so that the second device can guide the users to install the handoff application when the second device detects that the handoff application is not installed on the second device but the second device has the installation package for the handoff application.

For example, FIG. 14A, FIG. 14B, FIG. 14C, and FIG. 14D are a schematic diagram of another interface for installing a handoff application on a second device according to an embodiment of this application.

In the scenario corresponding to FIG. 14A, FIG. 14B, FIG. 14C, and FIG. 14D, when the first device and the second device meet a handoff condition, and when the first device starts video content in a video play application shown in FIG. 14A and the video play application has a handoff function, the first device may send an icon of the video play application and a message for indicating handoff to the second device. The second device receives the icon of the video play application and the message for indicating handoff that are sent by the first device. When the second device receives an operation of swiping up by a user from the bottom of the screen, the second device may display an interface shown in FIG. 14B. The interface may include a pop-up window 1401. For descriptions of the pop-up window 1401, refer to the descriptions of the pop-up window 1301 in the embodiment corresponding to FIG. 13B. Details are not described herein again.

On the interface shown in FIG. 14B, when the second device receives a trigger operation performed by a user on the pop-up window 1401 and the video play application is not installed on the second device but the second device has an installation package for the video play application, the second device may display an interface shown in FIG. 14C. The interface shown in FIG. 14C may include a pop-up window 1402. The pop-up window 1402 includes text information for indicating to install a handoff application, an icon of the handoff application, a Recover control, and a Cancel control. The text information for indicating to install a handoff application may be displayed as follows: Application super-handoff, video play application. No video play application is installed on this device. You can complete the handoff task after installation.

On the interface shown in FIG. 14C, when the second device receives a trigger operation performed by a user on the Recover control in the pop-up window 1402, the second device may install the video play application, and display an interface shown in FIG. 14D after the installation ends. The interface shown in FIG. 14D may include a pop-up window 1403.

It can be understood that the pop-up window 1403 on the interface shown in FIG. 14D may alternatively be automatically displayed when the installation of the video play application ends, so that a user does not need to continue to perform handoff in a pop-up window on the background multitasking interface, thereby simplifying handoff steps after the installation of the application. Alternatively, the pop-up window 1403 on the interface shown in FIG. 14D may be displayed when a user re-triggers the handoff function in the video play application on the first device and the second device receives a corresponding instruction for triggering the handoff function. An operation of re-triggering, by the user, the handoff function in the video play application on the first device may be as follows: The user performs operations of adjusting screen brightness, adjusting a volume, triggering pausing of play, switching between front and rear, sliding a progress bar, or the like in video play application on the first device.

It can be understood that the user may continue to perform handoff based on the pop-up window 1403 on the interface shown in FIG. 14D, or may continue to perform handoff based on the pop-up window 1401 on the background multitasking interface shown in FIG. 14B.

Base on this, even if a handoff application is not installed on the second device, the second device can guide a user recover and install the handoff application on the second device, so that the second device can continue to implement a handoff function after the installation of the handoff application is completed.

In a possible implementation when the second device receives a trigger operation performed by a user on a handoff application with a handoff bubble, the handoff application is not installed on the second device, and the second device does not have an installation package for the handoff application, the second device may alternatively guide the user to download the handoff application from the app store. For example, FIG. 15A, FIG. 15B, FIG. 15C, and FIG. 15D are a schematic diagram of still another interface for installing a handoff application on a second device according to an embodiment of this application.

A background multitasking interface of the second device is shown in FIG. 15A. The interface may include a pop-up window 1501. When the second device receives a trigger operation performed by a user on the pop-up window 1501, no video play application is installed on the second device, and the second device does not have an installation package for the video play application but can obtain the installation package for the video play application from the app store, the second device may display an interface shown in FIG. 15B. The interface shown in FIG. 15B may include a pop-up window 1502. The pop-up window 1502 may include an icon of a handoff application, text information for indicating to install the handoff application, a Cancel control, and a Go to download control. The text information for indicating to install the handoff application may be displayed as follows: Welcome to "super-handoff". No video play application is installed on your phone. You can complete the handoff task after installation.

On the interface shown in FIG. 15B, when the second device receives a trigger operation performed by a user on the Go to download control, the second device may open the app store and search for the video play application. For example, the second device displays an interface shown in FIG. 15C. The interface may include an Install control 1503, a control for exiting the installation of the video play application, application rating information, application installation count information, age restriction information of the application, application introduction information, a control for viewing application comments, a control for viewing recommended applications, a share control, and the like.

On the interface shown in FIG. 15C, when the second device receives a trigger operation performed by a user on the Install control 1503, the second device may automatically install the video play application, and display an interface shown in FIG. 15D after the installation ends. It can be understood that, for descriptions of a pop-up window 1504 on the interface shown in FIG. 15D, reference may be made to the descriptions of the pop-up window 1403 on the interface shown in FIG. 14D. Details are not described herein again.

Base on this, even if a handoff application is not installed on the second device, the second device can guide a user download the handoff application from the app store, so that the second device can continue to implement a handoff function after the downloading of the handoff application is completed.

In a possible implementation, in the embodiments corresponding to FIG. 11A, FIG. 11B, FIG. 11C, FIG. 11D, and FIG. 11E to FIG. 15A, FIG. 15B, FIG. 15C, and FIG. 15D in the scenario 2, when no video account is logged in on the first device, the first device can implement a handoff function for video content in a video play application that does not require a video account or a video membership, so that the second device can also play a video through handoff in a video play application to which no video account is logged in. Alternatively, when a membership video account is logged in on the first device, the first device can implement a handoff function for common video content that does not require a video membership and membership video content that requires a video membership, so that the second device can implement handoff for common video content and trial watching for membership video content in a video play application to which a membership video account is logged in, and the second device can implement handoff for membership video content in a video play application to which a video account is logged in and with which a video membership has been registered.

It can be understood that, when the first device triggers handoff in a case in which a video account is logged in to a video play application, a video membership is registered, and a video that requires a video membership needs to be viewed, a third-party APP service cloud may determine, based on one or more of the following statuses of a video play application on the second device, whether the second device can normally play handoff video content.

The statuses of the video play application on the second device may include a status of whether a video member is logged in to the video play application on the second device, a status of whether a handoff video requires a video membership, a status of whether trial watching is required in a watching progress during handoff for a video, and the like.

It can be understood that only a small part of video content of a membership video can be watched for trial in a video play application to which no video account is logged in or a video play application to which a video account without a video membership is logged in.

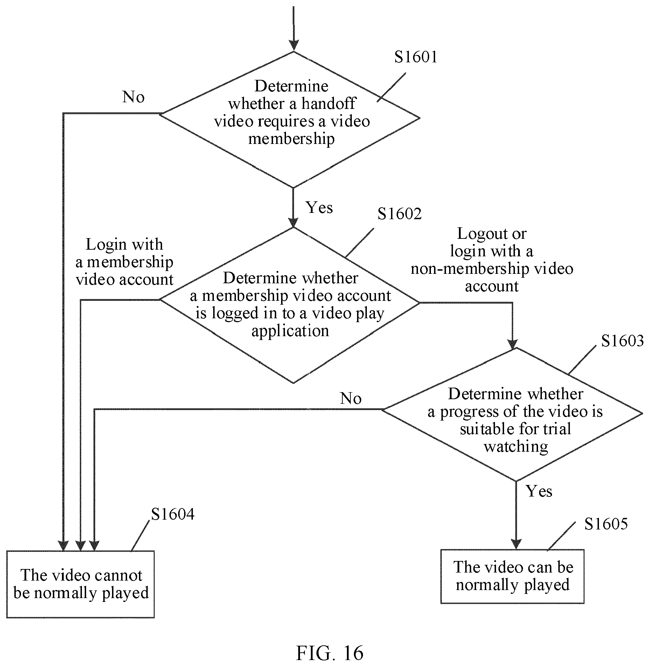

For example, FIG. 16 is a schematic flowchart of determining, by a third-party APP service cloud, whether to play a video according to an embodiment of this application.

S1601: The third-party APP service cloud determines whether a handoff video requires a video membership.

When the third-party APP service cloud determines that the handoff video requires a video membership, the third-party APP service cloud may perform a step shown in S1602. Alternatively, when the third-party APP service cloud determines that the handoff video does not require a video membership, the third-party APP service cloud may perform a step shown in S1604.

S1602: The third-party APP service cloud determines whether a membership video account is logged in to a video play application.

When the third-party APP service cloud determines whether a membership video account is logged in to the video play application, the third-party APP service cloud may perform a step shown in S1604. Alternatively, when the third-party APP service cloud determines that no membership video account is logged in to the video play application or a non-membership video account is logged in to the video play application, the third-party APP service cloud may perform a step shown in S1603.

S1603: The third-party APP service cloud determines whether a progress of the video is suitable for trial watching.

When the third-party APP service cloud determines that the video is within a trial range, the third-party APP service cloud determines that the progress of the video is suitable for trial watching, and performs a step shown in S1605. Alternatively, when the third-party APP service cloud determines that the video is not within the trial range, the third-party APP service cloud determines that the progress of the video is not suitable for trial watching, and performs a step shown in S1604.

S1604: The third-party APP service cloud determines that the second device can normally play the handoff video.

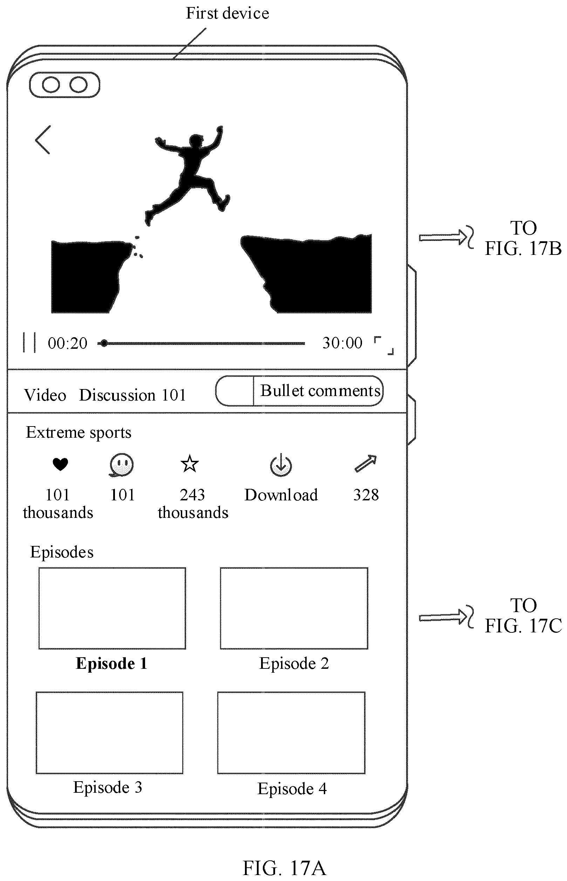

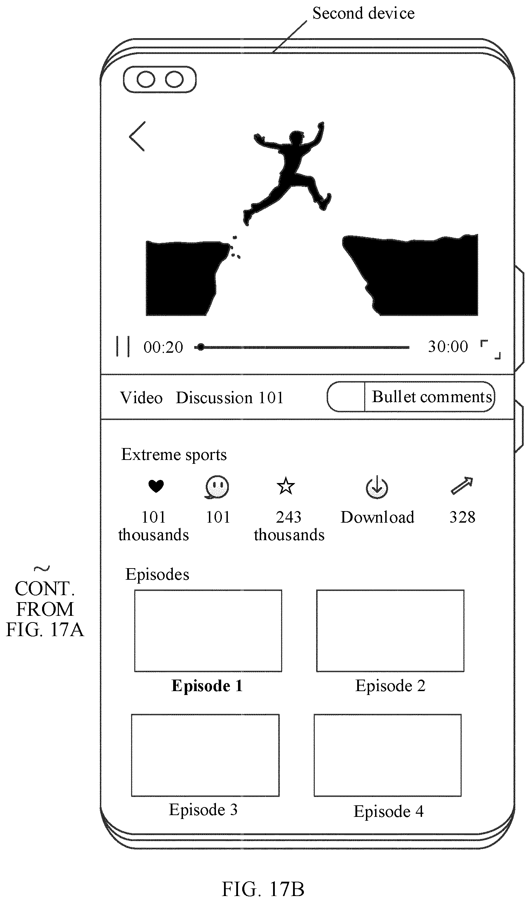

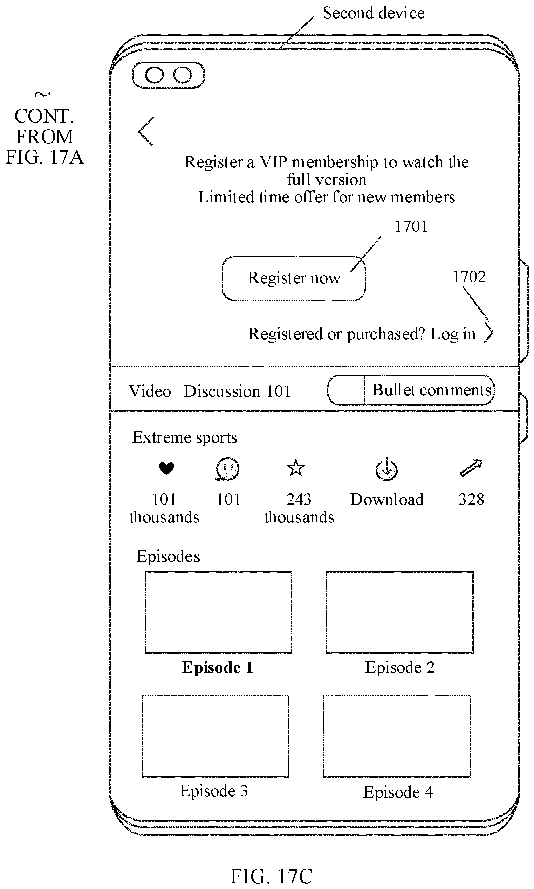

For example, FIG. 17A, FIG. 17B, and FIG. 17C are a schematic diagram of an interface for registering a membership on a second device during handoff according to an embodiment of this application.

The first device displays an interface shown in FIG. 17A. When the first device triggers handoff in a case in which a membership video account is logged in to a video play application and a video that requires a video membership needs to be watched, the third-party APP service cloud may determine, based on the steps shown in S1601 to S1604, that the second device can normally play the handoff video, so that the second device can receive a trigger operation performed by a user on a pop-up window for handoff based on FIG. 13A, FIG. 13B, and FIG. 13C (or the embodiment corresponding to FIG. 14A, FIG. 14B, FIG. 14C, and FIG. 14D or FIG. 15A, FIG. 15B, FIG. 15C, and FIG. 15D), and then the second device displays an interface shown in FIG. 17B.

S1605: The third-party APP service cloud determines that the second device cannot normally play the handoff video.

It can be understood that, when the third-party APP service cloud determines, based on the steps shown in S1601 to S1605, that the second device cannot normally play the handoff video, the second device may display an interface for registering a membership in FIG. 17C. The interface may include a control for indicating to register a membership (or referred to as a Register now control) 1701, text information for indicating to register a membership, text information for indicating login, a control 1702 for indicating login, and the like. The text information for indicating to register a membership may be displayed as follows: Register a VIP membership to watch the full version. Limited time offer for new members. The text information for indicating login may be as follows: Registered or purchased? Log in.

On the interface shown in FIG. 17C, when the third-party APP service cloud determines that the second device cannot normally play the video because no video account is logged in, login may be performed on the second device based on the control 1702 for indicating login. Alternatively, when the third-party APP service cloud determines that the video cannot be normally played because no video membership is registered, a membership may be registered on the second device based on the control 1701 for indicating to register a membership.

Based on this, the third-party APP service cloud may determine, based on different statuses of the video play application, whether the second device can normally play the handoff video, and the second device can present different display interfaces, thereby improving user experience of using a handoff function.

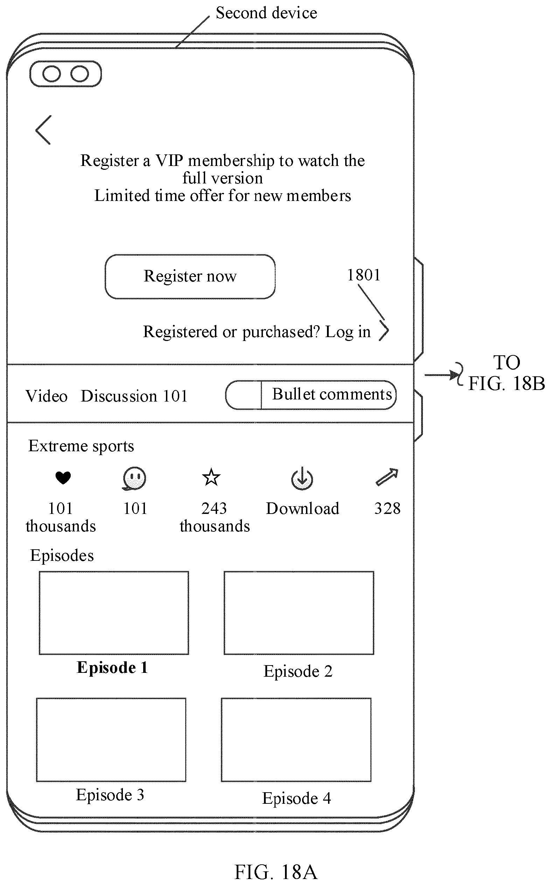

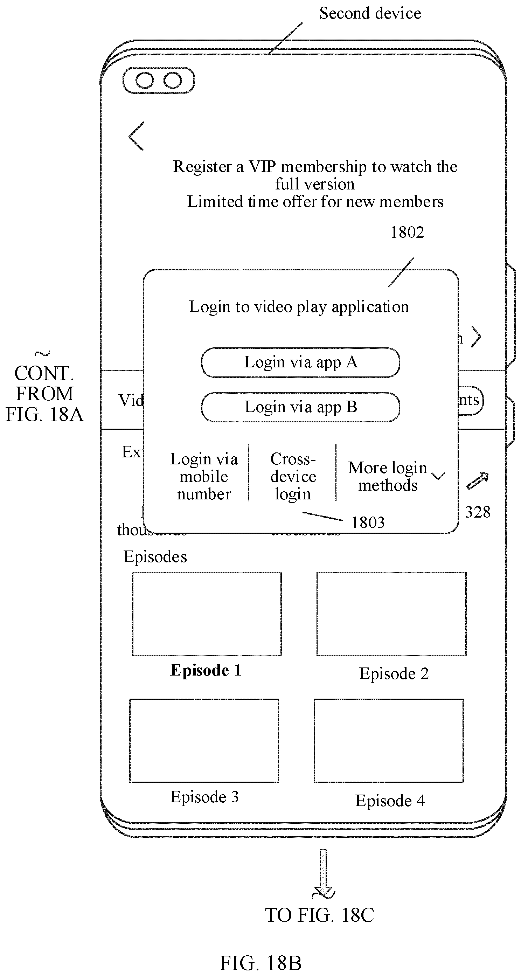

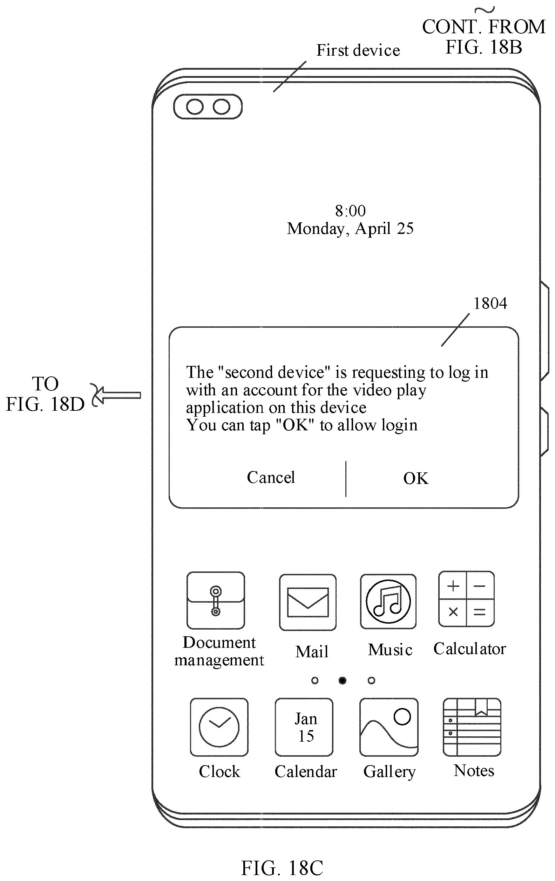

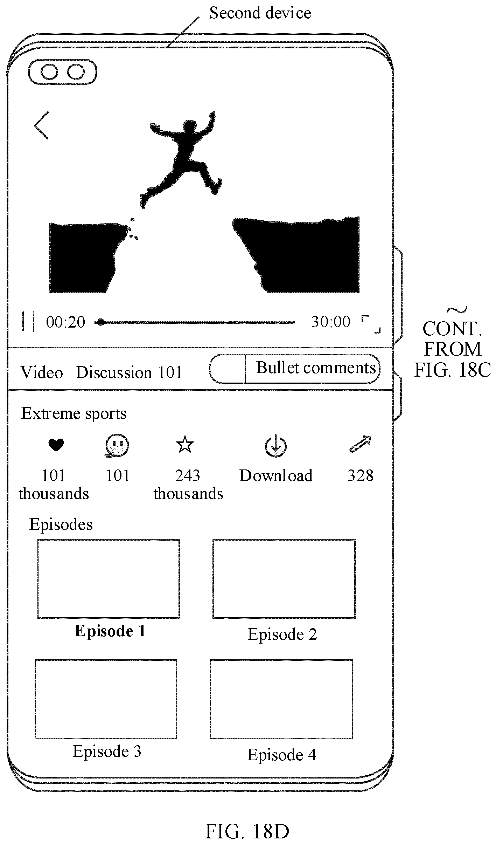

In a possible implementation, based on the interface shown in FIG. 17C, the second device may alternatively implement cross-device login through the first device. For example, FIG. 18A, FIG. 18B, FIG. 18C, and FIG. 18D are a schematic diagram of an interface for cross-device login according to an embodiment of this application.

The second device may display an interface shown in FIG. 18A. Content displayed on the interface may be the same as that displayed on the interface shown in FIG. 17C. Details are not described herein again. On the interface shown in FIG. 18A, when the second device receives a trigger operation performed by a user on a control 1801 for indicating login, the second device may display an interface shown in FIG. 18B. The interface shown in FIG. 18B may include a pop-up window 1802. The pop-up window 1802 may include a control for indicating login of a video account via an app A, a control for indicating login of a video account via an app B, a control for login of a video account via a mobile number, a control 1803 for cross-device login of a video account, a control for viewing more login methods, and the like.

On the interface shown in FIG. 18B, when the second device receives a trigger operation performed by a user on the control 1803 for cross-device login of a video account, the second device may send, to the first device, a message for indicating cross-device login to a video play application. Further, the first device may display an interface shown in FIG. 18C. The interface shown in FIG. 18C may include a pop-up window 1804. The pop-up window 1804 may include text information for indicating cross-device login, a Cancel control, and an OK control. The text information for indicating cross-device login may be displayed as follows: The "second device" is requesting to log in with an account for the video play application on this device. You can tap "OK" to allow login.

On the interface shown in FIG. 18C, when the first device receives a trigger operation performed by a user on the OK control, the first device may send, to the second device, login information of the video play application that is stored on the first device and a message for indicating that cross-device login is allowed. Further, the second device may automatically log in to the video play application on the second device by using the login information of the video play application that is sent by the first device, and display an interface shown in FIG. 18D. The login information of the video play application may include video account information, password information corresponding to the video account, and the like.

Based on this, the second device may implement cross-device login to a handoff application through the first device, to conveniently implement login and a handoff function, thereby improving user experience.

In a possible implementation, when a handoff application on the first device includes at least one built-in service module (or referred to as a handoff sub-application), the second device may alternatively implement handoff for a handoff sub-application on the second device.

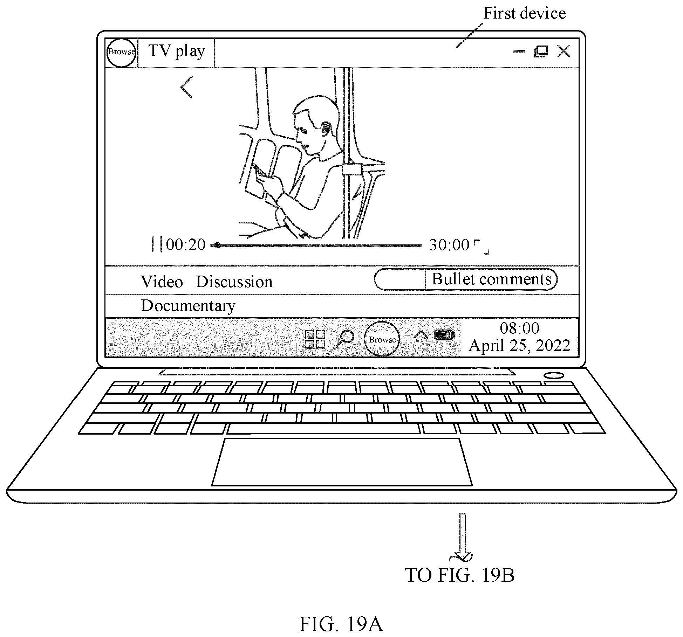

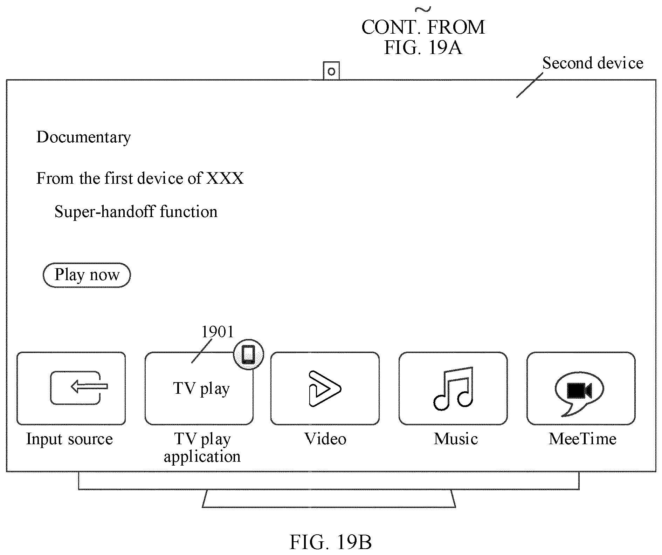

For example, FIG. 19A and FIG. 19B are a schematic diagram of an interface on which a second device implements handoff for a handoff sub-application on a first device according to an embodiment of this application. In the embodiment corresponding to FIG. 19A and FIG. 19B, an example in which the first device is a computer and the second device is a large screen is used for description, but this example does not constitute a limitation on this embodiment of this application.

When the first device receives an operation of opening, by a user, a TV play interface in a browser application (the TV play interface belongs to a built-in TV play application of the browser application), the first device displays an interface shown in FIG. 19A. When the first device determines that the TV play application has a handoff function, a TV play application on the first device may initiate a handoff function, so that the second device can display an interface shown in FIG. 19B on a boot interface. Further, the second device may implement handoff for a document handoff status of the TV play application on the first device based on a card 1901 for the TV play application or a Play now control on the user interface shown in FIG. 19B.

The interface shown in FIG. 19A includes television content named Documentary and the like. The interface shown in FIG. 19B includes the card 1901 with a handoff bubble for the TV play application and the like. Other content displayed on the interface shown in FIG. 19A is similar to that displayed on the interface shown in FIG. 10B, and other content displayed on the interface shown in FIG. 19B is similar to that displayed on the interface shown in FIG. 11B. Details are not described herein again.

In a possible implementation, when the first device closes the interface corresponding to the TV play application in the browser application and views another interface of the browser application, the first device may also initiate, to the second device, a handoff function corresponding to the browser application, so that the second device can display a card with a handoff bubble for the browser application on the boot interface.

It can be understood that, even if a handoff application on the first device includes another built-in handoff sub-application that provides a service, the first device may also initiate, to the second device, a handoff function corresponding to the handoff sub-application, so that the second device can implement handoff for a handoff status of the handoff sub-application.

### Scenario 3: application handoff method when a plurality of scenarios are included

In this embodiment of this application, when a scenario includes a first device, a second device, and a third device, and both the first device and the second device meet a conditions for initiating handoff, the third device may determine, based on a location of a focus of a user, whether to implement handoff for the first device or the second device.

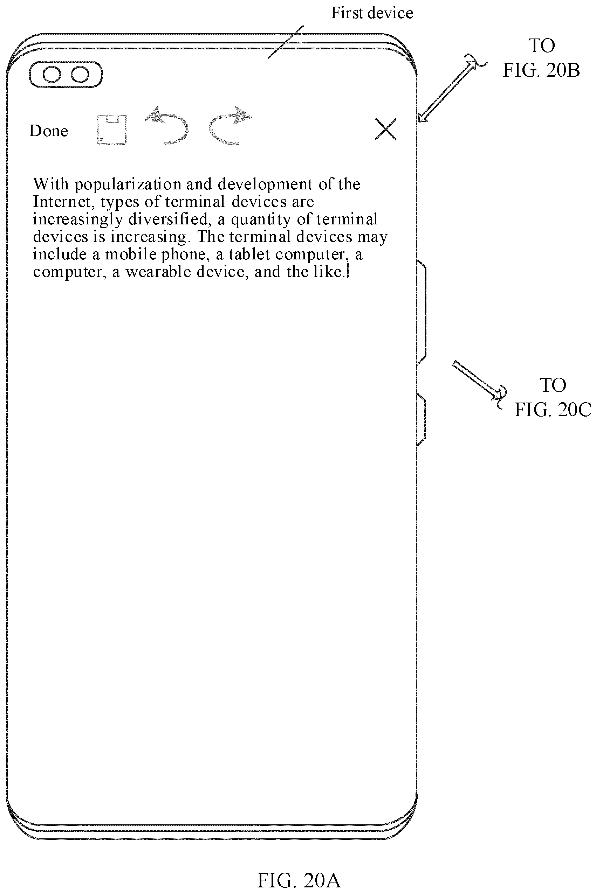

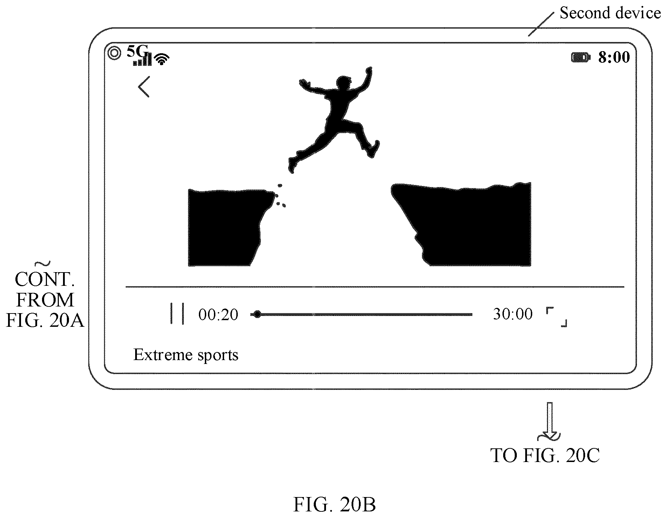

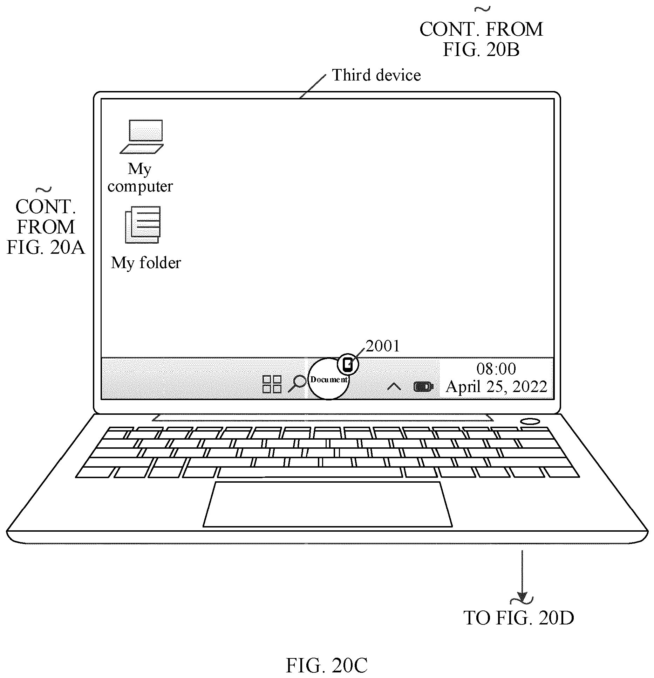

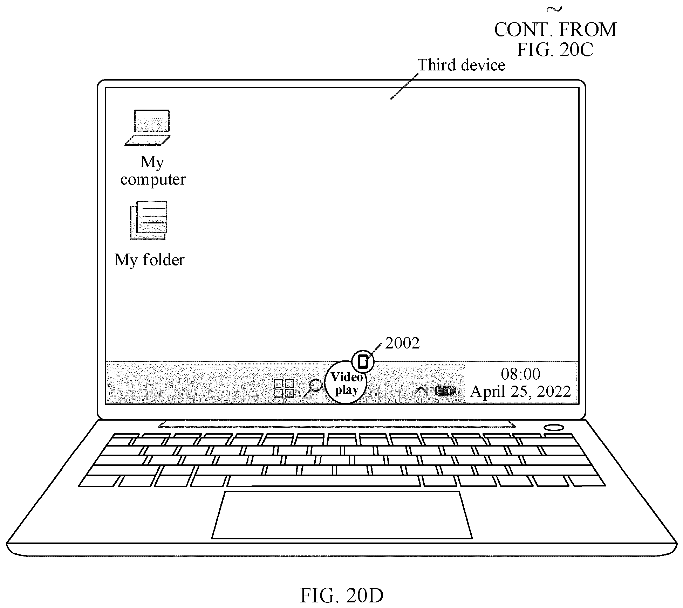

For example, FIG. 20A, FIG. 20B, FIG. 20C, and FIG. 20D are a schematic diagram of a plurality of scenarios according to an embodiment that does not relate to the subject matter of the enclosed claims. In the embodiment corresponding to FIG. 20A, FIG. 20B, FIG. 20C, and

FIG. 20D, an example in which the first device is a mobile phone, the second device is a tablet computer, and the third device is a computer is used for description, but this example does not constitute a limitation on this embodiment of this application.

As shown in FIG. 20A, FIG. 20B, FIG. 20C, and FIG. 20D, the first device is in an office scenario as shown in FIG. 20A, and can initiate a handoff function to the second device or the third device; and the second device is in a video play scenario shown in FIG. 20B, and can initiate a handoff function to the first device and the third device.

In a possible implementation, when the first device preferentially initiates a handoff function corresponding to a document application and the second device then initiates a handoff function corresponding to a video play application, the third device may first display, in response to the handoff function of the first device, an icon 2001 of the document application with a handoff bubble on an interface shown in FIG. 20C; and then, in response to the handoff function initiated by the second device, the third device cancels the display of the icon 2001 of the document application with the handoff bubble, and displays an icon 2002 of the video play application with a handoff bubble on an interface shown in FIG. 20D.

It can be understood that, because the handoff-to third device cannot simultaneously display handoff bubbles for a plurality of devices, the third device may sequentially display, based on time at which handoff devices initiate handoff, handoff applications with handoff bubbles that correspond to different handoff devices.

In a possible implementation, when the third device displays, in response to the handoff function of the second device, the video play application with the handoff bubble displayed on the interface shown in FIG. 20D, and when the first device receives an operation performed by a user to trigger re-initiation of a handoff function, in response to the handoff function of the first device, the third device may cancel the display of the icon of the video play application with the handoff bubble, and display an icon of the document application with a handoff bubble.

Based on this, even if a plurality of handoff devices simultaneously initiate handoff, a handoff-to device can sequentially provide handoff prompts according to a chronological order in which the handoff is initiated, and display a handoff application with a handoff bubble that corresponds to the latest device that initiates a handoff function.

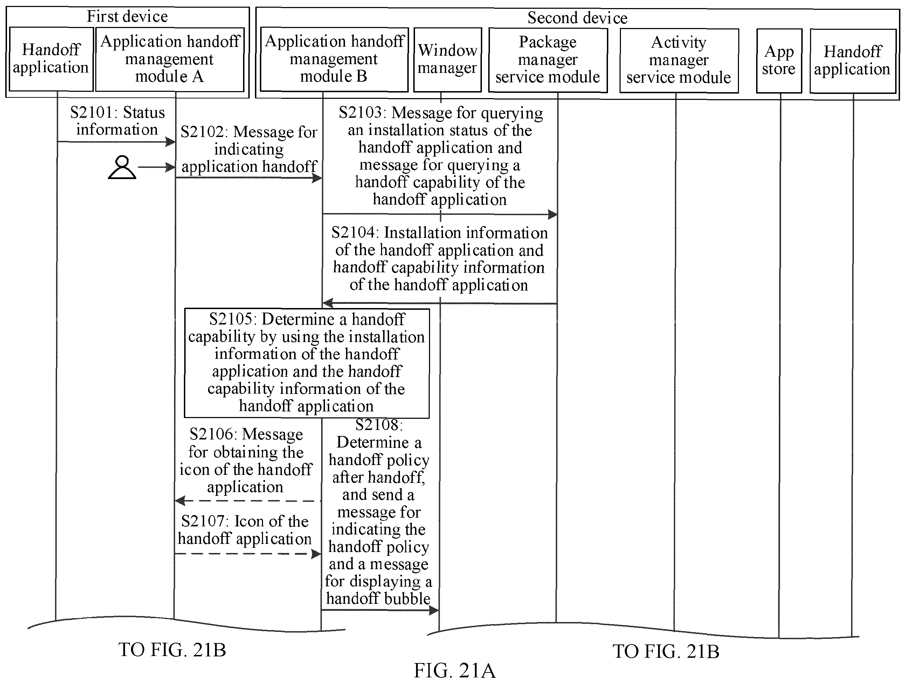

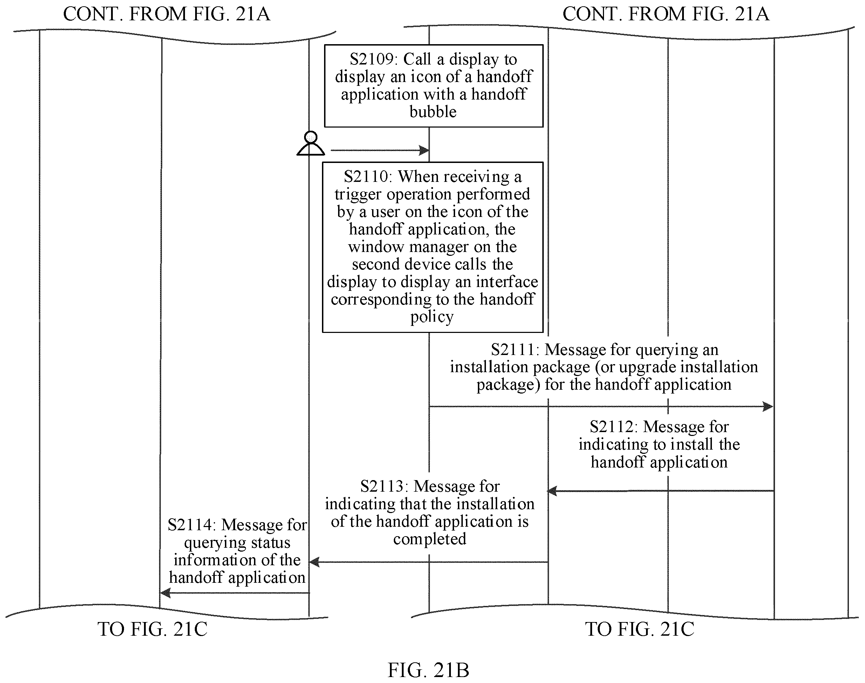

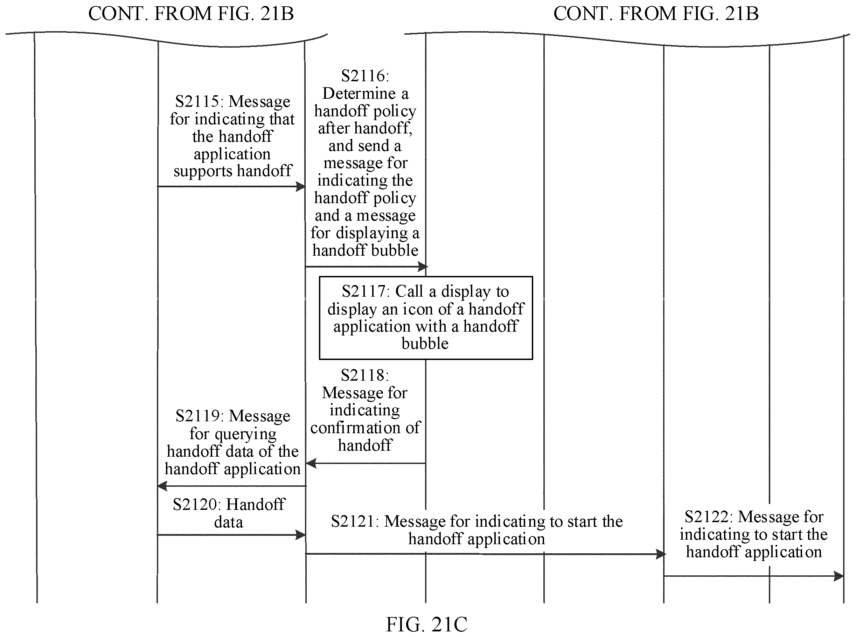

Based on the embodiments corresponding to FIG. 5A, FIG. 5B, FIG. 5C, and FIG. 5D to FIG. 20A, FIG. 20B, FIG. 20C, and FIG. 20D, the application handoff method in the embodiments of this application is described. For example, FIG. 21A, FIG. 21B, and FIG. 21C are a schematic flowchart of an application handoff method according to an embodiment of this application.

In the embodiment corresponding to FIG. 21A, FIG. 21B, and FIG. 21C, a first device may include a handoff application and an application handoff management module A; and the second device may include an application handoff management module B, a window manager, a package manager service module, an activity manager service module, an app store, and a handoff application. The handoff application on the first device and the handoff application on the second device may be a same application.

As shown in FIG. 21A, FIG. 21B, and FIG. 21C, the application handoff method may include the following steps.

S2101: The handoff application on the first device sends status information to the application handoff management module A.

In this embodiment of this application, the status information is used for indicating information generated when a status of the handoff application changes. For example, the handoff application on the first device may send the generated status information to the application handoff management module A in real time.

In an implementation, in an office scenario, the status information may include status information of the handoff application during editing, handoff data, information related to triggering by a user for the handoff application, and the like. The information related to triggering by the user for the handoff application may include information about the user turning on a screen, information about the user triggering any control in the handoff application, information about the user switching from another application to the handoff application, and the like. In the office scenario, the handoff data may include location data of a cursor and the like.

In an implementation, in a video play scenario, the status information may include status information of the handoff application during video play, handoff data, information related to triggering by a user for the handoff application, and the like. The information related to triggering by the user for the handoff application may include information about the user adjusting screen brightness, information about the user adjusting a volume, information about the user triggering pausing of play, information about the user turning on a screen, information about the user sliding a progress bar, and the like. In the video play scenario, the handoff data may include video play progress data, a video code, and the like. The video code enables the second device to obtain a video corresponding to the video code from a database of the video play application.

In a possible implementation, the status information in the step shown in S2101 may further include information for indicating whether the first device switches from the handoff application to another application, information for indicating whether a focus of the first device is on the handoff application, or the like. It can be understood that the application handoff management module A does not trigger a step shown in S2102 when the status information is the information for indicating whether the first device switches from the handoff application to another application or information for indicating that the focus of the first device is not on the handoff application.

It can be understood that the status information may include other content in different application scenarios. This is not limited in this embodiment of this application.

S2102: When the first device receives a trigger operation performed by a user on the handoff application, the application handoff management module A sends a message for indicating application handoff to the application handoff management module B.

That the first device sends the message for indicating application handoff may be understood as that the first device initiates a handoff function in this embodiment of this application.

For example, when the first device and the second device belong to a same trust ring, the application handoff management module A determines, based on the status information, whether the first device can initiate handoff. For example, when the handoff application on the first device receives a trigger operation performed by a user on the handoff application, the handoff application on the first device may send, to the application handoff management module A, status information corresponding to the trigger operation; and when application handoff management module A determines, based on the status information corresponding to the trigger operation, that the first device can initiate handoff, the application handoff management module A may send, to the application handoff management module B on the second device in the trust ring in a broadcast manner, the message for indicating application handoff.

It can be understood that, when the application handoff management module A on the first device receives the status information sent by the handoff application on the first device but the application handoff management module A determines, based on the status information, that the first device does not need to initiate handoff, the step shown in S2102 cannot be performed.

**In** the office scenario, for example, the handoff application is a document application, and the trigger operation performed by the user on the handoff application may include an operation of opening any document in the document application by the user, an operation of turning on a screen by the user, an operation of triggering any control in the document application by the user, and an operation of switching from another application to the document application by the user.

In the video play scenario, for example, the handoff application is a video play application, and the trigger operation performed by the user on the handoff application may include an operation of opening any video play interface in the video play application, an operation of adjusting screen brightness by the user, an operation adjusting a volume by the user, an operation of triggering pausing of play by the user, an operation of turning on a screen by the user, an operation of sliding a progress bar by the user, and the like. In this embodiment of this application, the trigger operation performed by the user on the handoff application is not limited.

It can be understood that interaction between the application handoff management module A and the application handoff management module B in this embodiment of this application may be implemented through broadcasting. Details are not described below again.

In a possible implementation, when the application handoff management module A sends the message for indicating application handoff to the application handoff management module B in S2102, the application handoff management module A may also send, through broadcasting, an icon of the handoff application to the application handoff management module B. Adaptively, when the application handoff management module B receives the message for indicating application handoff and the icon of the handoff application, the application handoff management module B may directly send the message for indicating application handoff and the icon of the handoff application to the window manager, so that the window manager performs a step shown in S2109 to display a handoff application with a handoff bubble.

S2103: The application handoff management module B sends, to the package manager service module on the second device, a message for querying an installation status of the handoff application and a message for querying a handoff capability of the handoff application.

For example, the package manager service module may store installation information of an application, handoff capability information of the application, installation package information of the application, version information of the application. The installation information of the application indicates whether the application is installed on the device. The handoff capability information of the application indicates whether the application has a handoff capability. The handoff capability information of the application may be preset in the handoff application.

S2104: The package manager service module on the second device sends installation information of the handoff application and handoff capability information of the handoff application to the application handoff management module B.

S2105: The application handoff management module B determines a handoff capability by using the installation information of the handoff application and the handoff capability information of the handoff application.

For example, when the application handoff management module B determines that the handoff application is installed on the second device and the handoff application has a handoff capability, the application handoff management module B may determine that the handoff application on the second device can take over the handoff function initiated by the first device, and then perform steps shown in S2106, S2107, and S2116 to S2122. Alternatively, when application handoff management module B determines that the handoff application is not installed, the application handoff management module B may perform steps shown in S2106 to S2122.

S2106: The application handoff management module B sends a message for obtaining the icon of the handoff application to the application handoff management module A

S2107: The application handoff management module A sends the icon of the handoff application to the application handoff management module B.

It can be understood that, when the application handoff management module A has sent the icon of the handoff application to the application handoff management module B in the step shown in S2102, the steps shown in S2106 and S2107 may not be performed between the second device and the first device.

S2108: The application handoff management module B determines a handoff policy after handoff, and sends, to the window manager on the second device, a message for indicating the handoff policy and a message for displaying a handoff bubble.

In this embodiment of this application, the handoff policy is used for indicating how the second device performs display when a user clicks/taps an icon of a handoff application with a handoff bubble on the second device. Specifically, the handoff policy may include a prompt for installation of the handoff application, a prompt for an upgrade of the handoff application, a prompt for handoff display of the handoff application, and the like.

In an implementation, when the application handoff management module B determines that the handoff application is installed and both the installed version of the handoff application and a version of the handoff application on the first device meet a handoff capability, the application handoff management module B may determine that the handoff policy is a prompt for handoff display of the handoff application. Then the application handoff management module B may perform a step shown in S2117.

Version information of the handoff application on the first device may be sent to the application handoff management module B along with the icon of the handoff application in the step shown in S2102 (or in the step shown in S2107). Version information of the handoff application on the second device may be sent by the package manager service module on the second device to the application handoff management module B in the step shown in S2104.

In another implementation, when the application handoff management module B determines that the handoff application is installed but the installed version of the handoff application does not meet a handoff capability, the application handoff management module B may determine that the handoff policy is a prompt for an upgrade of the handoff application. Then the second device may perform the step shown in S2109.

In still another implementation, when the application handoff management module B determines that the handoff application is not installed, the application handoff management module B may determine that the handoff policy is a prompt for installation of the handoff application. Then the application handoff management module B may perform the step shown in S2109.

S2109: The window manager on the second device calls a display to display an icon of a handoff application with a handoff bubble.

S2110: When receiving a trigger operation performed by a user on the icon of the handoff application, the window manager on the second device calls the display to display an interface corresponding to the handoff policy.

For example, when the trigger operation performed by the user on the icon of the handoff application is received and the handoff policy is a prompt for installation of the handoff application, the window manager on the second device may call the display to display the interface shown in FIG. 15B. Alternatively, when the trigger operation performed by the user on the icon of the handoff application is received and the handoff policy is a prompt for an upgrade of the handoff application, the window manager on the second device may call the display to display a pop-up window for indicating an upgrade. The pop-up window for indicating an upgrade may display prompt information, for example: The version of the current video play application is low. You can complete the handoff task after an upgrade.

S2111: When receiving an operation of confirming, by a user, installation (or upgrade) of the handoff application, the window manager on the second device sends, to the app store on the second device, a message for querying an installation package (or upgrade installation package) for the handoff application.

S2112: The app store on the second device calls the display to display an installation (or upgrade) interface for the handoff application, and when receiving an operation of confirming the download (or confirming the upgrade) by a user, downloads the installation package (or upgrade installation package) for the handoff application, and sends, to the package manager service module on the second device, a message for indicating to install the handoff application.

For example, the second device may download, to the package manager service module on the second device, the installation package (or upgrade installation package) for the handoff application that is obtained from the app store, and complete installation of the handoff application in the package manager service module. It can be understood that, for the installation interface for the handoff application, reference may be made to the interface shown in FIG. 15C.

S2113: The package manager service module on the second device installs the handoff application, and sends, to the application handoff management module B when the installation is completed, a message for indicating that the installation of the handoff application is completed.

In a possible implementation, the application handoff management module B may repeat the steps described in S2103 and S2104 to re-determine an installation status and a handoff capability of the handoff application, to avoid an installation error for the handoff application and improve security of a handoff function.

S2114: The application handoff management module B sends a message for querying status information of the handoff application to the application handoff management module A.

It can be understood that the second device may re-determine, based on the message for querying status information of the handoff application, whether the handoff application on the first device still has a handoff requirement.

S2115: The application handoff management module A sends, to the application handoff management module B, a message for indicating that the handoff application supports handoff.

For example, when the first device receives the message, sent by the second device, for querying status information of the handoff application, the first device may determine a status of the handoff application.

It can be understood that, because the application handoff management module A may obtain, in real time, status information sent by the handoff application on the first device (as shown in the step of S2101), the application handoff management module A can determine a status of the handoff application based on the status information of the handoff application.

For example, when the application handoff management module A determines that the handoff application meets a handoff status based on information indicating that a focus of the first device is on the handoff application (for example, the focus of the first device is on the handoff application), the application handoff management module A may send, to the application handoff management module B, the message indicating that the handoff application supports handoff.

In a possible implementation, when the application handoff management module A determines that the first device has switched from the handoff application to another application or a focus of the first device is not on the handoff application, the application handoff management module A may determine that the handoff application on the first device no longer needs handoff. In this case, the application handoff management module A may not send any message indicating a current status to the application handoff management module B, or the first device may send, to the application handoff management module B, a message for indicating that handoff is not to be performed.

S2116: The application handoff management module B determines a handoff policy after handoff, and sends, to the window manager on the second device, a message for indicating the handoff policy and a message for displaying a handoff bubble.

For example, because the second device may receive a message, sent by the first device, for indicating that the handoff application supports handoff in S2115, the second device may re-determine a handoff policy.

For a method for determining a handoff policy in the step shown in S2116, refer to the descriptions of the step shown in S2108. Details are not described herein again.

S2117: The window manager on the second device calls a display to display an icon of a handoff application with a handoff bubble.

S2118: When receiving a trigger operation performed by a user on the icon of the handoff application, the window manager on the second device sends a message for indicating confirmation of handoff to the application handoff management module B.

S2119: The application handoff management module B sends a message for querying handoff data of the handoff application to the application handoff management module A.

For the handoff data of the handoff application, refer to the descriptions of the handoff data in the step shown in S2101. Details are not described herein again.

S2120: The application handoff management module A sends the handoff data to the application handoff management module B.

S2121: The application handoff management module B sends, to the activity manager service module on the second device, a message for indicating to start the handoff application.

In a possible implementation, the application handoff management module B may alternatively send the handoff data to the activity manager service module on the second device while sending the message for indicating to start the handoff application.

S2122: The activity manager service module on the second device sends, to the handoff application on the second device, a message for indicating to start the handoff application.

In a possible implementation, the activity manager service module on the second device may alternatively send the handoff data to the handoff application on the second device while sending the message for indicating to start the handoff application.

Further, when the handoff application on the second device receives the message for indicating to start the handoff application, the second device may start the application, and implement handoff for the handoff application on the first device based on the handoff data (and/or data obtained by the third-party APP service cloud through application data synchronization).

It can be understood that, in this embodiment of this application, the second device may implement handoff in the handoff application on the second device based on both the handoff data and the data obtained by the third-party APP service cloud through application data synchronization. For example, in a scenario of a video play application, when the second device receives a video code (or video link) in handoff data, the second device may query, in a database in the third-party APP service cloud, a video corresponding to the video code, and implement application handoff based on other handoff data.

Based on this, the first device displays an interface corresponding to a handoff application, obtains status information corresponding to the handoff application, and sends, to the second device, a message for indicating the second device to perform handoff for content displayed in the handoff application. Then the second device displays an icon of a handoff application with a handoff bubble, so that the second device can implement handoff for a handoff status of the handoff application on the first device based on triggering by a user for the icon of the handoff application. This simplifies an application handoff method, and improves user experience for an application handoff function.

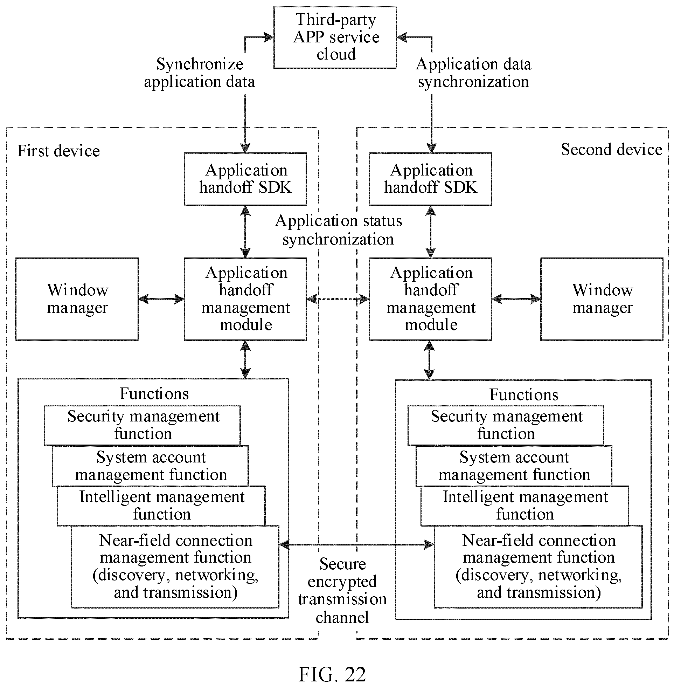

Based on the application handoff method corresponding to FIG. 21A, FIG. 21B, and FIG. 21C, a structure of an application handoff system in embodiments of this application is described by using an example. For example, FIG. 22 is a schematic structural diagram of an application handoff system according to an embodiment of this application.

As shown in FIG. 22, the application handoff system may include a third-party APP service cloud, a first device, and a second device. The third-party APP service cloud is configured to synchronize data for a handoff application.

The first device includes a window manager and an application handoff management module. For functions of the window manager and the application handoff management module, refer to the descriptions in the embodiment corresponding to FIG. 3. An application handoff software development kit (software development kit, SDK) is configured in the application handoff management module. The application handoff SDK is used for handoff for an application status.

The second device includes a window manager and an application handoff management module. For functions of the window manager and the application handoff management module, refer to the descriptions in the embodiment corresponding to FIG. 4. An application handoff SDK is configured in the application handoff management module. The application handoff SDK is used for handoff for an application status.

The third-party APP service cloud is configured to synchronize data in a handoff application, to provide assistance for implementation of a handoff function.

It can be understood that the interfaces described in embodiments of this application are merely examples, and shall not be construed as a limitation on embodiments of this application.

It can be understood that the interfaces described in embodiments of this application are merely examples, and shall not be construed as a limitation on embodiments of this application.

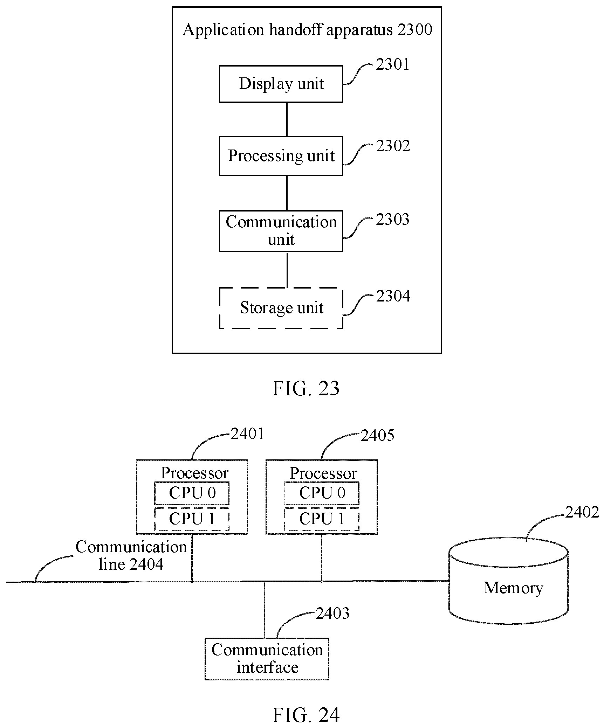

The method provided in the embodiments of this application is described above with reference to FIG. 5A, FIG. 5B, FIG. 5C, and FIG. 5D to FIG. 22, and an apparatus for performing the method in the embodiments of this application is described below. FIG. 23 is a schematic structural diagram of an application handoff apparatus according to an embodiment of this application. The application handoff apparatus may be the first device in the embodiments of this application, or may be a chip or a chip system in the first device. Alternatively, the application handoff apparatus may be the second device in the embodiments of this application, or may be a chip or a chip system in the second device.

As shown in FIG. 23, the application handoff apparatus 2300 may be applied to a communication device, a circuit, a hardware component, or a chip, and the application handoff apparatus includes a display unit 2301, a processing unit 2302, and a communication unit 2303. The display unit 2301 is configured to support display steps performed by the application handoff apparatus 2300. The processing unit 2302 is configured to support information processing steps performed by the application handoff apparatus 2300. The communication unit 2303 is configured to support data sending and data receiving steps performed by the application handoff apparatus 2300. For example, the communication unit 2303 may be an input or output interface, a pin, or a circuit. The display unit 2301, the processing unit 2302, and the communication unit 2303 may be units in the first device or units in the second device.

When the application handoff apparatus 2300 is the first device, an embodiment of this application provides an application handoff apparatus 2300. A display unit 2301 of a second device is configured to display an icon of a first target application and an identifier for indicating application handoff in response to reception of a first message sent by the first device, where the first message is used for indicating the second device to implement handoff for the first target application. The display unit 2301 of the second device is configured to display a first pop-up window including a first control in response to a first operation performed on the icon when the first target application is not installed on the second device, where the first pop-up window is used for asking a user whether to install the first target application. A processing unit 2302 of the second device is configured to install the first target application in response to a second operation performed on the first control, and the display unit 2301 of the second device is configured to: after the installation of the first target application is completed, re-display the icon of the first target application and the identifier for indicating application handoff. The display unit 2301 of the second device is configured to display a first application interface of the first target application in response to a third operation performed on the icon, where the first application interface is related to a second application interface displayed when the first device sends the first message to the second device.

When the application handoff apparatus 2300 is the second device, an embodiment of this application provides an application handoff apparatus. A communication unit 2303 of a first device is configured to send a first message to the second device, where the first message is used for indicating the second device to implement handoff for a first target application.

In a possible embodiment, the application handoff apparatus may further include a storage unit 2304. The processing unit 2302 is connected to the storage unit 2304 through a bus. The storage unit 2304 may include one or more memories, and the memory may be one or more devices or components in a circuit that are used to store a program or data. The storage unit 2304 may exist independently, and is connected to the processing unit 2302 included in the application handoff apparatus through a communication line. The storage unit 2304 may alternatively be integrated with the processing unit 2302.

The storage unit 2304 may store computer-executable instructions of the method of the terminal device, so that the processing unit 2302 performs the method in the foregoing embodiments. The storage unit 2304 may be a register, a cache, a RAM, or the like, and the storage unit 2304 may be integrated with the processing unit 2302. The storage unit 2304 may be a read-only memory (read-only memory, ROM) or another type of static storage device that may store static information and instructions, and the storage unit 2304 may be independent of the processing unit 2302. The storage unit 2304 may be a unit in the first device or a unit in the second device.

FIG. 24 is a schematic diagram of a hardware structure of another terminal device according to an embodiment of this application. As shown in FIG. 24, the terminal device includes a processor 2401, a communication line 2404, and at least one communication interface (a communication interface 2403 is used as an example for description in FIG. 24).

The processor 2401 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 2404 may include a circuit configured to transmit information between the foregoing components.

The communication interface 2403 uses any apparatus of a transceiver type to communicate with another device or a communication network such as an Ethernet, wireless local area networks (wireless local area networks, WLAN), and the like.

Possibly, the terminal device may further include a memory 2402.

The memory 2402 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory may exist independently, and is connected to the processor through the communication line 2404. The memory may alternatively be integrated with the processor.

The memory 2402 is configured to store computer-executable instructions for performing the solutions of this application, and the processor 2401 controls execution of the computer-executable instructions. The processor 2401 is configured to execute the computer-executable instruction stored in the memory 2402, to implement the application handoff method provided in the embodiments of this application.

Possibly, the computer-executable instructions in this embodiment of this application may also be referred to as application program code. This is not specifically limited in this embodiment of this application.

During specific implementation, in an embodiment, the processor 2401 may include one or more CPUs, for example, a CPU 0 and a CPU 1 in FIG. 24.

During specific implementation, in an embodiment, the terminal device may include a plurality of processors, for example, the processor 2401 and a processor 2405 in FIG. 24. Each of these processors may be a single-core (single-CPU) processor, or may be a multi-core (multi-CPU) processor. The processor herein may be one or more devices or circuits, and/or a processing core configured to process data (for example, computer program instructions).

The computer program product includes one or more computer instructions. When the computer program instructions are loaded and executed on the computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, including one or more usable media. The usable medium may include a magnetic medium (for example, a floppy disk, a hard disk, or a magnetic tape), an optical medium (for example, a digital versatile disc (digital versatile disc, DVD)), a semi-conductive medium (for example, a solid state disk (solid state disk, SSD)), or the like.

An embodiment of this application further provides a computer-readable storage medium. All or some of the methods described in the foregoing embodiments may be implemented by software, hardware, firmware, or any combination thereof. The computer-readable medium may include a computer storage medium and a communication medium, and may further include any medium that can transmit a computer program from one place to another. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. Any connection line may also be appropriately referred to as a computer-readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc (CD), a laser disc, an optical disc, a digital versatile disc (digital versatile disc, DVD), a floppy disk, and a blue ray disc, where the magnetic disk generally reproduces data in a magnetic manner, and the optical disc reproduces data optically by using laser.

The foregoing combination should also be included in the scope of the computer-readable medium.

## Claims

1. An application handoff method, applied to an application handoff system, wherein the application handoff system comprises at least a first device and a second device (501), and the method comprises:
displaying (S2109), by the second device (501), an icon (507) of a first target application, an identifier (508) for indicating application handoff, a first text information and a second text information in response to reception of a first message sent by the first device, wherein the first message is used for indicating the second device (501) to implement handoff for the first target application, the first text information is used for indicating handoff content in the first target application and the second text information is used for indicating a device from which the application handoff comes;
when duration in which a focus of the first device is on the first target application exceeds a time threshold, removing the focus of the first device from the first target application (507);
in response to any operation performed on the first target application (507) on the first device, re-initiating, by the first device, a handoff function to the second device (501), and displaying, by the second device (501), the icon (507) of the first target application and the identifier (508) for indicating application handoff; and
displaying (S2110), by the second device (501), a first application interface of the first target application in response to a fourth operation performed on the icon (507), wherein the first application interface is related to a second application interface displayed when the first device sends the first message to the second device (501).

2. The method according to claim 1, wherein the method further comprises:
displaying, by the second device (501), a first pop-up window comprising a first control in response to a first operation performed on the icon (507) when the first target application is not installed on the second device (501), wherein the first pop-up window is used for asking a user whether to install the first target application;
installing, by the second device (501), the first target application in response to a second operation performed on the first control, and after the installation of the first target application is completed, re-displaying the icon (507) of the first target application and the identifier (508) for indicating application handoff; and
displaying, by the second device (501), a first application interface of the first target application in response to a third operation performed on the icon (507), wherein the first application interface is related to a second application interface displayed when the first device sends the first message to the second device (501).

3. The method according to claim 1, wherein the method further comprises:
displaying, by the second device (501), the first application interface of the first target application in response to the first operation performed on the icon (507) when the first target application is installed on the second device (501) and the first target application has a target capability.

4. The method according to claim 2, wherein the displaying, by the second device (501), a first pop-up window comprising a first control in response to a first operation performed on the icon (507) when the first target application is not installed on the second device (501) comprises:
displaying, by the second device (501), the first pop-up window comprising the first control in response to the first operation performed on the icon (507) when the first target application is not installed on the second device (501) and the second device (501) has an installation package for the first target application; or
in response to the first operation performed on the icon (507), when the second device (501) determines that the second device (501) does not have an installation package for the first target application, displaying, by the second device (501), a second control for downloading the first target application from a first application;
when the second device (501) receives an operation performed on the second control, displaying, by the second device (501), a third control for downloading the installation package for the first target application;
when the second device (501) receives an operation performed on the third control, downloading, by the second device (501), the installation package for the first target application; and
when the first target application is not installed on the second device (501), displaying, by the second device (501), the first pop-up window comprising the first control.

5. The method according to claim 1, wherein the method further comprises:
when the first device does not receive any operation performed on the first target application within first preset time, canceling, by the second device (501), the display of the identifier (508) for indicating application handoff.

6. The method according to claim 1, wherein the first target application is a first-type application, and the method further comprises:
when a focus of the first device remains on the first-type application, sending, by the first device, the first message to the second device (501) when the first device receives an operation performed on a fourth control in the first-type application, wherein when the first-type application is an office application, the fourth control is a control for saving a file in the office application.

7. The method according to claim 1, wherein the first target application is a second-type application, and the method further comprises:
when a focus of the first device remains on the second-type application for longer than second preset time, removing the focus of the first device from the second-type application; and
when the first device receives any operation performed on the second-type application, sending, by the first device, the first message to the second device (501), wherein the second-type application is a multimedia play application.

8. The method according to claim 1, wherein the displaying, by the second device (501), an icon (507) of a first target application and an identifier (508) for indicating application handoff comprises:
when the second device (501) is a tablet computer, displaying, by the tablet computer in a dock bar, the icon (507) of the first target application and the identifier (508) for indicating application handoff; or
when the second device (501) is a computer, displaying, by the computer in a taskbar, the icon (507) of the first target application and the identifier (508) for indicating application handoff; or
when the second device (501) is a mobile phone, displaying, by the mobile phone on a background multitasking interface, the icon (507) of the first target application and the identifier (508) for indicating application handoff; or
when the second device (501) is a large screen, displaying, by the large screen on a boot interface, the icon (507) of the first target application and the identifier (508) for indicating application handoff.

9. The method according to claim 1, wherein the first message further comprises the icon (507) of the first target application.

10. The method according to claim 1, wherein a distance between the first device and the second device (501) meets a distance threshold, Bluetooth or Wi-Fi is enabled on both the first device and the second device (501), a same personal device account is logged in on both the first device and the second device (501), and the personal device account is an account used for login on the device.

11. The method according to claim 1, wherein the application handoff system further comprises a third device, and the method further comprises:
receiving, by the third device after receiving the first message, a third message sent by the second device (501), and displaying, by the third device, an icon of a second target application and the identifier for indicating application handoff in response to the third message, wherein the third message is used for indicating the third device to implement handoff for the second target application.

12. The method according to claim 1, wherein the method further comprises:
searching, by the first device, for a second device (501) that meets a preset condition, and displaying an icon of the second device (501);
when the first device receives an operation performed on the icon of the second device (501), sending, by the first device, the first message to the second device (501); and displaying, by the second device (501), the first application interface of the first target application in response to the first message.

13. A terminal device, comprising a memory, a processor, and a computer program stored in the memory and capable of running on the processor, wherein when the processor executes the computer program, the terminal device is enabled to perform the method performed by the first electronic device according to any one of claim 1 to claim 12, or the method performed by the second electronic device according to any one of claim 1 to claim 12.

14. A computer-readable storage medium, wherein the computer-readable storage medium stores a computer program, and when the computer program is executed by a processor, a computer is enabled to perform the method performed by the first electronic device according to any one of claim 1 to claim 12, or the method performed by the second electronic device according to any one of claim 1 to claim 12.

## Patentansprüche

1. Ein Verfahren zum Anwendungsübergang, angewendet in einem System zum Anwendungsübergang, wobei das System zum Anwendungsübergang mindestens ein erstes Gerät und ein zweites Gerät (501) umfasst, wobei das Verfahren Folgendes umfasst:
Anzeigen (S2109) eines Symbols (507) einer ersten Zielanwendung, einer Kennung (508) zur Anzeige des Anwendungsübergangs, einer ersten Textinformation und einer zweiten Textinformation durch das zweite Gerät (501) als Reaktion auf den Empfang einer ersten Nachricht, die vom ersten Gerät gesendet wird, wobei die erste Nachricht dazu dient, das zweite Gerät (501) anzuweisen, den Übergang für die erste Zielanwendung durchzuführen, die erste Textinformation zur Anzeige der Übergangsinhalte in der ersten Zielanwendung dient und die zweite Textinformation dazu verwendet wird, das Gerät anzuzeigen, von dem der Anwendungsübergang ausgeht;
Wenn die Dauer, in der der Fokus des ersten Geräts auf der ersten Zielanwendung liegt, einen Zeitschwellenwert überschreitet, wird der Fokus des ersten Geräts von der ersten Zielanwendung (507) entfernt;
als Reaktion auf eine beliebige Operation, die auf der ersten Zielanwendung (507) auf dem ersten Gerät ausgeführt wird, wird durch das erste Gerät erneut eine Übergabefunktion an das zweite Gerät (501) initiiert und durch das zweite Gerät (501) das Symbol (507) der ersten Zielanwendung sowie die Kennung (508) zur Anzeige des Anwendungsübergangs angezeigt; und
Anzeigen (S2110) einer ersten Anwendungsoberfläche der ersten Zielanwendung durch das zweite Gerät (501) als Reaktion auf eine vierte Operation, die am Symbol (507) ausgeführt wird, wobei die erste Anwendungsoberfläche mit einer zweiten Anwendungsoberfläche in Zusammenhang steht, die angezeigt wird, wenn das erste Gerät die erste Nachricht an das zweite Gerät (501) sendet.

2. Verfahren nach Anspruch 1, wobei das Verfahren ferner Folgendes umfasst:
Anzeigen eines ersten Pop-up-Fensters mit einer ersten Steuerung durch das zweite Gerät (501) als Reaktion auf eine erste Operation am Symbol (507), wenn die erste Zielanwendung auf dem zweiten Gerät (501) nicht installiert ist, wobei das erste Pop-up-Fenster dazu dient, den Benutzer zu fragen, ob die erste Zielanwendung installiert werden soll;
Installieren der ersten Zielanwendung durch das zweite Gerät (501) als Reaktion auf eine zweite Operation an der ersten Steuerung und nach Abschluss der Installation der ersten Zielanwendung erneutes Anzeigen des Symbols (507) der ersten Zielanwendung und der Kennung (508) zur Anzeige des Anwendungsübergangs; und
Anzeigen einer ersten Anwendungsoberfläche der ersten Zielanwendung durch das zweite Gerät (501) als Reaktion auf eine dritte Operation, die am Symbol (507) ausgeführt wird, wobei die erste Anwendungsoberfläche mit einer zweiten Anwendungsoberfläche in Zusammenhang steht, die angezeigt wird, wenn das erste Gerät die erste Nachricht an das zweite Gerät (501) sendet.

3. Verfahren nach Anspruch 1, wobei das Verfahren weiterhin umfasst:
Anzeige durch die zweite Vorrichtung (501) der ersten Anwendungsoberfläche der ersten Zielanwendung als Reaktion auf die erste Bedienaktion am Symbol (507), wenn die erste Zielanwendung auf der zweiten Vorrichtung (501) installiert ist und die erste Zielanwendung über eine Ziel-Funktion verfügt.

4. Verfahren nach Anspruch 2, wobei das Anzeigen durch die zweite Vorrichtung (501) eines ersten Pop-up-Fensters mit einer ersten Steuerung als Reaktion auf eine erste Bedienaktion am Symbol (507), wenn die erste Zielanwendung nicht auf der zweiten Vorrichtung (501) installiert ist, Folgendes umfasst:
Anzeige durch die zweite Vorrichtung (501) des ersten Pop-up-Fensters mit der ersten Steuerung als Reaktion auf die erste Bedienaktion am Symbol (507), wenn die erste Zielanwendung nicht auf der zweiten Vorrichtung (501) installiert ist und die zweite Vorrichtung (501) ein Installationspaket für die erste Zielanwendung besitzt; oder
wenn die zweite Vorrichtung (501) ermittelt, dass sie kein Installationspaket für die erste Zielanwendung besitzt, Anzeige einer zweiten Steuerung für das Herunterladen der ersten Zielanwendung aus einer ersten Anwendung durch die zweite Vorrichtung (501) als Reaktion auf die erste Bedienaktion am Symbol (507);
wenn die zweite Vorrichtung (501) eine Bedienaktion an der zweiten Steuerung erhält, Anzeige einer dritten Steuerung zum Herunterladen des Installationspakets für die erste Zielanwendung durch die zweite Vorrichtung (501);
wenn die zweite Vorrichtung (501) eine Bedienaktion an der dritten Steuerung erhält, Herunterladen des Installationspakets für die erste Zielanwendung durch die zweite Vorrichtung (501); und
wenn die erste Zielanwendung nicht auf der zweiten Vorrichtung (501) installiert ist, Anzeige durch die zweite Vorrichtung (501) des ersten Pop-up-Fensters mit der ersten Steuerung.

5. Verfahren nach Anspruch 1, wobei das Verfahren weiterhin umfasst:
wenn das erste Gerät innerhalb einer ersten voreingestellten Zeit keine Bedienaktion an der ersten Zielanwendung erhält, Abbrechen der Anzeige des Identifikators (508) zur Anzeige der Anwendungsübergabe durch die zweite Vorrichtung (501).

6. Verfahren nach Anspruch 1, wobei die erste Zielanwendung eine Anwendung des ersten Typs ist, und das Verfahren weiterhin umfasst:
Wenn der Fokus des ersten Geräts auf der Anwendung des ersten Typs verbleibt, sendet das erste Gerät dann die erste Nachricht an das zweite Gerät (501), wenn das erste Gerät eine auf einem vierten Steuerelement in der Anwendung des ersten Typs ausgeführte Bedienung empfängt, wobei das vierte Steuerelement, sofern es sich bei der Anwendung des ersten Typs um eine Office-Anwendung handelt, ein Steuerelement zum Speichern einer Datei in der Office-Anwendung ist.

7. Verfahren nach Anspruch 1, wobei die erste Zielanwendung eine Anwendung des zweiten Typs ist, und das Verfahren weiterhin Folgendes umfasst:
Wenn der Fokus des ersten Geräts länger als eine zweite voreingestellte Zeit auf der Anwendung des zweiten Typs verbleibt, wird der Fokus des ersten Geräts von der Anwendung des zweiten Typs entfernt; und
Wenn das erste Gerät eine beliebige auf der Anwendung des zweiten Typs ausgeführte Bedienung empfängt, sendet das erste Gerät die erste Nachricht an das zweite Gerät (501), wobei die Anwendung des zweiten Typs eine Multimedia-Player-Anwendung ist.

8. Verfahren nach Anspruch 1, wobei das Anzeigen durch das zweite Gerät (501) eines Symbols (507) der ersten Zielanwendung und eines Identifikators (508) zur Anzeige der Anwendungsübergabe Folgendes umfasst:
Wenn das zweite Gerät (501) ein Tablet-Computer ist, zeigt das Tablet-Computer in einer Dock-Leiste das Symbol (507) der ersten Zielanwendung und den Identifikator (508) zur Anzeige der Anwendungsübergabe an; oder
Wenn das zweite Gerät (501) ein Computer ist, zeigt der Computer in der Taskleiste das Symbol (507) der ersten Zielanwendung und den Identifikator (508) zur Anzeige der Anwendungsübergabe an; oder
Wenn das zweite Gerät (501) ein Mobiltelefon ist, zeigt das Mobiltelefon auf einer Hintergrund-Multitasking-Oberfläche das Symbol (507) der ersten Zielanwendung und den Identifikator (508) zur Anzeige der Anwendungsübergabe an; oder
Wenn das zweite Gerät (501) ein Großbildschirm ist, zeigt der Großbildschirm auf einer Boot-Oberfläche das Symbol (507) der ersten Zielanwendung und den Identifikator (508) zur Anzeige der Anwendungsübergabe an.

9. Verfahren nach Anspruch 1, wobei die erste Nachricht weiterhin das Symbol (507) der ersten Zielanwendung umfasst.

10. Verfahren nach Anspruch 1, wobei ein Abstand zwischen dem ersten Gerät und dem zweiten Gerät (501) einen Abstandsgrenzwert einhält, Bluetooth oder WLAN auf beiden Geräten aktiviert ist, auf beiden Geräten dasselbe persönliche Geräte-Konto angemeldet ist und das persönliche Geräte-Konto ein Konto für die Anmeldung am Gerät ist.

11. Verfahren nach Anspruch 1, wobei das System zur Anwendungsübergabe weiterhin ein drittes Gerät umfasst und das Verfahren weiterhin Folgendes umfasst:
Empfang, durch das dritte Gerät nach dem Erhalt der ersten Nachricht, einer dritten vom zweiten Gerät gesendeten Nachricht (501), und Anzeige, durch das dritte Gerät, eines Symbols einer zweiten Zielanwendung sowie des Identifikators zur Anzeige der Anwendungsübergabe als Antwort auf die dritte Nachricht, wobei die dritte Nachricht dazu verwendet wird, um das dritte Gerät anzuweisen, die Übergabe für die zweite Zielanwendung durchzuführen.

12. Das Verfahren nach Anspruch 1, wobei das Verfahren ferner umfasst:
Suchen, durch das erste Gerät, nach einem zweiten Gerät (501), das eine voreingestellte Bedingung erfüllt, und Anzeige eines Symbols des zweiten Geräts (501);
Wenn das erste Gerät eine auf das Symbol des zweiten Geräts (501) ausgeführte Aktion empfängt, sendet das erste Gerät die erste Nachricht an das zweite Gerät (501); und Anzeige, durch das zweite Gerät (501), der ersten Anwendungsoberfläche der ersten Zielanwendung als Antwort auf die erste Nachricht.

13. Ein Endgerät, umfassend einen Speicher, einen Prozessor und ein im Speicher gespeichertes und auf dem Prozessor ausführbares Computerprogramm, wobei das Endgerät beim Ausführen des Computerprogramms durch den Prozessor in die Lage versetzt wird, das vom ersten elektronischen Gerät gemäß einem der Ansprüche 1 bis 12 ausgeführte Verfahren oder das vom zweiten elektronischen Gerät gemäß einem der Ansprüche 1 bis 12 ausgeführte Verfahren durchzuführen.

14. Ein computerlesbares Speichermedium, wobei das computerlesbare Speichermedium ein Computerprogramm speichert, und wenn das Computerprogramm von einem Prozessor ausgeführt wird, ein Computer in die Lage versetzt wird, das vom ersten elektronischen Gerät gemäß einem der Ansprüche 1 bis 12 ausgeführte Verfahren oder das vom zweiten elektronischen Gerät gemäß einem der Ansprüche 1 bis 12 ausgeführte Verfahren durchzuführen.

## Revendications

1. Procédé de transfert d'application, appliqué à un système de transfert d'application, ledit système comprenant au moins un premier dispositif et un second dispositif (501), le procédé comprenant :
l'affichage (S2109), par le second dispositif (501), d'une icône (507) d'une première application cible, d'un identifiant (508) pour indiquer le transfert d'application, d'une première information textuelle et d'une seconde information textuelle en réponse à la réception d'un premier message envoyé par le premier dispositif, ledit premier message servant à indiquer au second dispositif (501) de réaliser le transfert pour la première application cible, la première information textuelle servant à indiquer le contenu du transfert dans la première application cible, et la seconde information textuelle servant à indiquer le dispositif d'où provient le transfert d'application ;
lorsque la durée pendant laquelle le focus du premier dispositif est sur la première application cible dépasse un seuil temporel, le retrait du focus du premier dispositif de la première application cible (507) ;
en réponse à toute opération effectuée sur la première application cible (507) sur le premier dispositif, le réamorçage, par le premier dispositif, d'une fonction de transfert vers le second dispositif (501), et l'affichage, par le second dispositif (501), de l'icône (507) de la première application cible et de l'identifiant (508) pour indiquer le transfert d'application ; et
l'affichage (S2110), par le second dispositif (501), d'une première interface applicative de la première application cible en réponse à une quatrième opération effectuée sur l'icône (507), la première interface applicative étant liée à une seconde interface applicative affichée lorsque le premier dispositif envoie le premier message au second dispositif (501).

2. Procédé selon la revendication 1, dans lequel le procédé comprend en outre :
l'affichage, par le second dispositif (501), d'une première fenêtre contextuelle comprenant un premier contrôle en réponse à une première opération effectuée sur l'icône (507) lorsque la première application cible n'est pas installée sur le second dispositif (501), la première fenêtre contextuelle servant à demander à un utilisateur s'il souhaite installer la première application cible ;
l'installation, par le second dispositif (501), de la première application cible en réponse à une seconde opération effectuée sur le premier contrôle, et, après l'installation de la première application cible, le réaffichage de l'icône (507) de la première application cible et de l'identifiant (508) pour indiquer le transfert d'application ; et
l'affichage, par le second dispositif (501), d'une première interface applicative de la première application cible en réponse à une troisième opération effectuée sur l'icône (507), la première interface applicative étant liée à une seconde interface applicative affichée lorsque le premier dispositif envoie le premier message au second dispositif (501).

3. Le procédé selon la revendication 1, dans lequel le procédé comprend en outre :
afficher, par le second dispositif (501), la première interface d'application de la première application cible en réponse à la première opération effectuée sur l'icône (507) lorsque la première application cible est installée sur le second dispositif (501) et que la première application cible dispose d'une capacité cible.

4. Le procédé selon la revendication 2, dans lequel l'affichage, par le second dispositif (501), d'une première fenêtre contextuelle comprenant un premier contrôle en réponse à une première opération effectuée sur l'icône (507), lorsque la première application cible n'est pas installée sur le second dispositif (501), comprend :
afficher, par le second dispositif (501), la première fenêtre contextuelle comprenant le premier contrôle en réponse à la première opération effectuée sur l'icône (507) lorsque la première application cible n'est pas installée sur le second dispositif (501) et que le second dispositif (501) dispose d'un paquet d'installation pour la première application cible ; ou
en réponse à la première opération effectuée sur l'icône (507), lorsque le second dispositif (501) détermine qu'il ne dispose pas d'un paquet d'installation pour la première application cible, afficher, par le second dispositif (501), un second contrôle permettant de télécharger la première application cible à partir d'une première application ;
lorsque le second dispositif (501) reçoit une opération effectuée sur le second contrôle, afficher, par le second dispositif (501), un troisième contrôle pour télécharger le paquet d'installation de la première application cible ;
lorsque le second dispositif (501) reçoit une opération effectuée sur le troisième contrôle, télécharger, par le second dispositif (501), le paquet d'installation de la première application cible ; et
lorsque la première application cible n'est pas installée sur le second dispositif (501), afficher, par le second dispositif (501), la première fenêtre contextuelle comprenant le premier contrôle.

5. Le procédé selon la revendication 1, dans lequel le procédé comprend en outre :
lorsque le premier dispositif ne reçoit aucune opération effectuée sur la première application cible dans un premier délai prédéfini, annuler, par le second dispositif (501), l'affichage de l'identifiant (508) destiné à indiquer la transmission de l'application.

6. Le procédé selon la revendication 1, dans lequel la première application cible est une application de premier type, et le procédé comprend en outre :
lorsqu'un focus du premier dispositif reste sur l'application de premier type, l'envoi, par le premier dispositif, du premier message au second dispositif (501) lorsque le premier dispositif reçoit une opération effectuée sur un quatrième contrôle dans l'application de premier type, dans laquelle, lorsque l'application de premier type est une application bureautique, le quatrième contrôle est un contrôle permettant de sauvegarder un fichier dans l'application bureautique.

7. Le procédé selon la revendication 1, dans lequel la première application cible est une application de second type, et le procédé comprend en outre :
quand un focus du premier dispositif reste sur l'application de second type pendant plus longtemps qu'un second temps prédéfini, retirer le focus du premier dispositif de l'application de second type ; et
lorsque le premier dispositif reçoit une opération quelconque effectuée sur l'application de second type, l'envoi, par le premier dispositif, du premier message au second dispositif (501), l'application de second type étant une application de lecture multimédia.

8. Le procédé selon la revendication 1, dans lequel l'affichage, par le second dispositif (501), d'une icône (507) d'une première application cible et d'un identifiant (508) indiquant le transfert d'application comprend :
lorsque le second dispositif (501) est une tablette, l'affichage, par la tablette dans une barre d'accueil, de l'icône (507) de la première application cible et de l'identifiant (508) indiquant le transfert d'application ; ou
lorsque le second dispositif (501) est un ordinateur, l'affichage, par l'ordinateur dans une barre des tâches, de l'icône (507) de la première application cible et de l'identifiant (508) indiquant le transfert d'application ; ou
lorsque le second dispositif (501) est un téléphone mobile, l'affichage, par le téléphone mobile sur une interface multitâche en arrière-plan, de l'icône (507) de la première application cible et de l'identifiant (508) indiquant le transfert d'application ; ou
lorsque le second dispositif (501) est un grand écran, l'affichage, par le grand écran sur une interface de démarrage, de l'icône (507) de la première application cible et de l'identifiant (508) indiquant le transfert d'application.

9. Le procédé selon la revendication 1, dans lequel le premier message comprend en outre l'icône (507) de la première application cible.

10. Le procédé selon la revendication 1, dans lequel la distance entre le premier dispositif et le second dispositif (501) respecte un seuil de distance, le Bluetooth ou le Wi-Fi est activé sur les deux dispositifs, un même compte personnel d'appareil est connecté sur les deux dispositifs, et le compte personnel d'appareil est un compte utilisé pour la connexion sur l'appareil.

11. Le procédé selon la revendication 1, dans lequel le système de transfert d'application comprend en outre un troisième dispositif, et le procédé comprend en outre :
réception, par le troisième dispositif après la réception du premier message, d'un troisième message envoyé par le deuxième dispositif (501), et affichage, par le troisième dispositif, d'une icône d'une seconde application cible et de l'identifiant indiquant le transfert d'application en réponse au troisième message, ledit troisième message étant utilisé pour indiquer au troisième dispositif d'effectuer le transfert pour la seconde application cible.

12. Le procédé selon la revendication 1, dans lequel le procédé comprend en outre :
recherche, par le premier dispositif, d'un deuxième dispositif (501) répondant à une condition prédéfinie, et affichage d'une icône du deuxième dispositif (501) ;
lorsque le premier dispositif reçoit une opération effectuée sur l'icône du deuxième dispositif (501), envoi, par le premier dispositif, du premier message au deuxième dispositif (501) ; et affichage, par le deuxième dispositif (501), de la première interface d'application de la première application cible en réponse au premier message.

13. Un dispositif terminal, comprenant une mémoire, un processeur, et un programme informatique stocké dans la mémoire et pouvant être exécuté sur le processeur, dans lequel, lorsque le processeur exécute le programme informatique, le dispositif terminal est apte à mettre en œuvre le procédé exécuté par le premier dispositif électronique selon l'une quelconque des revendications 1 à 12, ou le procédé exécuté par le second dispositif électronique selon l'une quelconque des revendications 1 à 12.

14. Un support de stockage lisible par ordinateur, dans lequel le support de stockage informatique stocke un programme informatique, et lorsqu'il est exécuté par un processeur, un ordinateur est apte à mettre en œuvre le procédé exécuté par le premier dispositif électronique selon l'une quelconque des revendications 1 à 12, ou le procédé exécuté par le second dispositif électronique selon l'une quelconque des revendications 1 à 12.
